(19) Europäisches Patentamt
European Patent Office
Office européen des brevets

(11) **EP 4 686 992 A1**

(12) **EUROPÄISCHE PATENTANMELDUNG**

(43) Veröffentlichungstag:
**04.02.2026   Patentblatt 2026/06**

(21) Anmeldenummer: **24191465.4**

(22) Anmeldetag: **29.07.2024**

(51) Internationale Patentklassifikation (IPC):
**G05B 19/418** (2006.01)        **G06Q 10/0631** (2023.01)
**G05B 23/02** (2006.01)

(52) Gemeinsame Patentklassifikation (CPC):
**G05B 19/41865; G05B 19/41845; G06Q 10/06;
G06Q 10/0631;** G05B 23/0283; G05B 2219/32019;
G05B 2219/32365; G05B 2219/33125

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Murrelektronik GmbH
71570 Oppenweiler (DE)**

(72) Erfinder:
• **Pfestorf, Sebastian
  71570 Oppenweiler (DE)**
• **Sven, Binder
  71522 Backnang (DE)**

(74) Vertreter: **Bösherz Goebel Patentanwälte
Rheinberger Weg 6
40670 Meerbusch (DE)**

(54) **VERFAHREN ZUR AUTOMATISIERTEN UMGESTALTUNG EINER INDUSTRIELLEN ANLAGE**

(57)    Die Erfindung betrifft ein Verfahren (100) zur automatisierten Umgestaltung einer industriellen Anlage (1), bei welcher Komponenten (20) der industriellen Anlage (1) zur Bereitstellung einer Anlagenfunktionalität miteinander verbunden sind.

Fig. 1

**Beschreibung**

Die vorliegende Erfindung betrifft ein Verfahren zur automatisierten Umgestaltung einer industriellen Anlage und insbesondere für eine Optimierung der Gesamtanlageneffektivität (OEE) in Abhängigkeit verfügbarer Komponenten, der tatsächlichen Maschinennutzung sowie der tatsächlich verbauten Komponenten und produktionstechnischen Ansprüche.

Stand der Technik

Die mit einem Aufbau und Betrieb einer industriellen Anlage verbunden Aufgaben wie das Planen, Installieren, Einrichten, Warten, Instandhalten und Erweitern der industriellen Automatisierungstechnik sind komplex. Dies gilt für zentralisierte Schaltschrankkonzepte ebenso, wie für dezentralisierte Konzepte, in denen Steuerungsmodule direkt im Feld der Anlage angebracht werden.

Der Erfolg und die Effizienz bei der Umsetzung dieser Aufgaben ist von einer Vielzahl unterschiedlicher Faktoren abhängig. Dies kann bspw. veränderte Anforderungen an die industrielle Anlage, der Zustand und die zeitliche Verfügbarkeit von Komponenten der Anlage, eine mengenmäßige Verfügbarkeit von Ressourcen und Werkzeugen und individuelle Fähigkeiten der beteiligten Personen betreffen. Bspw. kann sich das Anforderungsprofil durch zukünftige Aufträge, die durch die industrielle Anlage bearbeitet werden sollen, verändern. Weiter kann sich die Bereitstellung von Ersatzteilen verzögern oder es kann ein unerwarteter Wartungsbedarf oder Instandhaltungsbedarf bei der Anlage auftreten. Außerdem sind typischerweise mehrere Personen mit unterschiedlichen Spezialisierungen und Fähigkeitsprofilen beteiligt, wie Anlagen-Planer, Elektro-Planer, Installateure, Anlagenprogrammierer, was Potential für Fehler bei der Wartung und für weitere Ineffizienz bei der Umsetzung einbringt.

Insbesondere bei industriellen Anlagen mit hoher Anlagenintensität ist ferner die Anlagenverfügbarkeit von großer Bedeutung. Für Anwendungen wie die Serienfertigung gilt die Gesamtanlageneffektivität als existenziell. Dabei sind ungeplante Stillstände, die Erhöhung des Qualitätsgrades und die Reduzierung von Rüstzeiten von besonderer Bedeutung. Diese werden durch herkömmliche Lösungen oft nur unzureichend optimiert.

Offenbarung der Erfindung

Es ist eine Aufgabe der vorliegenden Erfindung, die voranstehenden Nachteile und Probleme zumindest teilweise zu reduzieren und/oder zu beheben. Insbesondere ist es eine Aufgabe der Erfindung, eine verbesserte Optimierung der Gesamtanlageneffektivität zu ermöglichen.

Gegenstand der Erfindung ist ein Verfahren mit den Merkmalen des Anspruchs 1, ein Computerprogramm mit den Merkmalen des Anspruchs 14 sowie eine Vorrichtung mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm sowie der erfindungsgemäßen Vorrichtung, und jeweils umgekehrt, so dass bezüglich der Offenbarung der Erfindung stets auch eine wechselseitige Bezugnahme möglich ist.

Gegenstand der Erfindung ist insbesondere ein Verfahren zur automatisierten Umgestaltung einer industriellen Anlage und/oder für eine Optimierung der Gesamtanlageneffektivität (OEE) der industriellen Anlage, vorzugsweise in Abhängigkeit von

a) verfügbaren Ressourcen und/oder Komponenten, und/oder
b) einer tatsächlichen Anlagennutzung, insbesondere Maschinennutzung, und/oder
c) tatsächlich verbauten Komponenten, und/oder
d) produktionstechnischen Ansprüche.

Alternativ oder zusätzlich dient das Verfahren zur computergestützten OEE Optimierung und/oder aktiven Anleitung (eines Benutzers) zur Ausführung der wenigstens einen oder mehreren ermittelten Maßnahmen, insbesondere Umgestaltungsmaßnahmen.

Die industrielle Anlage kann eine Anlage sein, bei welcher Komponenten der Anlage zur Bereitstellung einer Anlagenfunktionalität - vorzugsweise dezentral oder zentral - miteinander verbunden sind. Zentral bedeutet in diesem Zusammenhang insbesondere, dass alle Komponenten mit einer zentralen Steuerung wie einer SPS verbunden sind, was eine zentrale Überwachung, Dokumentation und Steuerung der Anlagenfunktionen ermöglicht. Dezentral bedeutet insbesondere, dass die Komponenten Verbindungsmodule umfassen können, die im Feld der Anlage angeordnet sind und eine dezentrale Verbindung von weiteren Komponenten ermöglicht. Die weiteren Komponenten sind bspw. Geräte wie Aktoren oder Sensoren und/oder können über eine Punkt-zu-Punkt Verbindung mit den Verbindungsmodulen verbunden sein. Die Verbindungsmodule sind beispielsweise Feldbusmodule, die über einen Feldbus mit einer zentralen Steuerung verbunden sein können. Alternativ oder zusätzlich können die Verbindungsmodule auch selbst eine dezentrale Steuerung/Steuerungsfunktionalität aufweisen, was eine flexible Anpassung und Skalierung der Anlage ermöglicht.

Die Komponenten können Geräte aufweisen wie Aktoren oder Sensoren, die bei der dezentralen Topologie mit den Verbindungsmodulen und bei der zentralen Topologie direkt mit der zentralen Steuerung verbunden sind. Die Verbindungsmodule können daher eine effektive Verbindung und/oder Steuerung der Geräte im Feld bieten, was die Effizienz und Reaktionsfähigkeit der Anlage verbessert.

Die industrielle Anlage kann gemäß einem Anlagentyp ggf. als eine elektrische und/oder pneumatische und/oder hydraulische und/oder fluidtechnische und/oder mechanische Anlage ausgeführt sein. Entsprechend kann die Anlagenfunktionalität eine Vielzahl von Anwendungen betreffen, von der einfachen mechanischen Bearbeitung bis hin zu komplexen, automatisierten Prozesssteuerungen.

Es können bei der industriellen Anlage Komponenten zur Bereitstellung einer Anlagenfunktionalität miteinander verbunden sein. Die Anlage kann ferner als wenigstens eine der nachfolgend genannten Maschinen ausgebildet sein: eine Automatisierungsanlage, eine Produktionsanlage, eine Logistikanlage, eine Produktionsstraße, ein Bearbeitungszentrum, ein Industrieroboter, eine Fertigungsanlage, ein Aggregat oder ein Elektrogerät. Die Anlagenfunktionalität kann entsprechend eine Automatisierung, eine Produktion, eine Logistik, eine Förderung, einen Transport, eine Produktion, eine Bearbeitung, eine Fertigung oder dergleichen umfassen.

Es kann ferner eine Installationsspezifikation vorgesehen sein, welche beispielsweise eine Installationsvorgabe und/oder einen digitalen Schaltplan und/oder einen mechanischen, pneumatischen, hydraulischen, fluidtechnischen oder ähnlichen Plan umfasst. Diese Spezifikation kann zumindest den Aufbau der industriellen Anlage, die Verbindung der Komponenten und/oder zugehörige technische Anforderungen und/oder Eigenschaften und/oder die Anlagenfunktionalität spezifizieren, was eine automatisierte, präzise und effiziente Installation, Wartung und Erweiterung ermöglicht.

Das Verfahren kann dabei die nachfolgenden Schritte umfassen, welche bevorzugt automatisiert und vorzugsweise nacheinander oder in beliebiger Reihenfolge und/oder zumindest teilweise in der Cloud ausgeführt werden, wobei die Schritte auch wiederholt ausgeführt werden können:

Das erfindungsgemäße Verfahren kann zunächst ein Bereitstellen einer Installationsspezifikation umfassen. Diese kann zumindest einen Aufbau der industriellen Anlage und/oder die Verbindung(en) der Komponenten und/oder zugehörige technische Anforderungen und/oder Eigenschaften und/oder die Anlagenfunktionalität spezifizieren. Mit anderen Worten kann die Installationsspezifikation spezifizieren, was wo installiert ist und in welcher Qualität. Die Installationsspezifikation umfasst hierzu z. B. einen digitalen Schalt- und/oder Aufbauplan und/oder ECAD und/oder MCAD Daten. ECAD (Electronic Computer-Aided Design) Daten sind insbesondere digitale Informationen, die für die Planung und Konstruktion von elektrischen und fluide Systemen, Schaltplänen und Leiterplatten verwendet werden. Sie enthalten bspw. spezifische Details über elektrische und fluide Komponenten, deren Anordnung und Verbindungen, und/oder Informationen zur Signalverarbeitung und Energieverteilung. MCAD (Mechanical Computer-Aided Design) Daten sind insbesondere digitale Informationen, die in der mechanischen Konstruktion verwendet werden. Sie umfassen bspw. Details zu mechanischen Komponenten, deren Dimensionen, Toleranzen, Materialspezifikationen und/oder Montageanweisungen.

Zusätzlich kann die Installationsspezifikation ggf. auch interaktive 3D-Modelle umfassen. Ferner kann die Installationsspezifikation ggf. auch Betriebsmittelkennzeichen und/oder Identifikatoren angeben. Darüber hinaus können ggf. auch Werte angegeben und/oder Parameter spezifiziert sein, die für den Betrieb der konkreten Anlage spezifisch sind. Dies sind bspw. Druckbereiche und/oder -grenzen bei pneumatischen oder hydraulischen Anlagen und/oder Typen und Spezifikationen der verwendeten Ventile, Pumpen und Zylinder und/oder Layout und Dimensionierung der Rohrleitungen und Schlauchverbindungen, einschließlich ihrer Materialspezifikationen und Verbindungselemente und/oder dergleichen. Die Installationsspezifikation kann ferner auch Angaben über Abweichungen aufweisen, die bei dem Aufbau der Anlage gegenüber einer Installationsvorlage vorliegen.

Anschließend kann das erfindungsgemäße Verfahren vorsehen, dass ein Bereitstellen einer Nutzungsspezifikation erfolgt. Durch die Nutzungsspezifikation kann eine historische Benutzung der Anlage und/oder Komponenten und/oder von Ressourcen der Anlage dokumentiert sein. Mit anderen Worten kann die Nutzungsspezifikation eine Benutzungshistorie zu der Anlage und/oder den Komponenten der Anlage umfassen. Die Nutzungsspezifikation kann bspw. zusätzlich Angaben zur Wartungshistorie, zu durchgeführten Reparaturen, zu Austauschintervallen von Komponenten und/oder zu Leistungsdaten der Anlage über verschiedene Betriebszeiten hinweg beinhalten. Diese Informationen können dazu dienen, präventive Wartungsstrategien zu entwickeln und die Lebensdauer der Anlage zu optimieren.

Weiterhin kann die Nutzungsspezifikation ggf. Daten über die Betriebsbedingungen, unter denen die Anlage genutzt wurde, enthalten, wie zum Beispiel Betriebstemperaturen, Lastzyklen und/oder Umgebungsbedingungen. Diese detaillierten Angaben ermöglichen eine tiefere Analyse der Betriebseffizienz und können zur Verbesserung der Anlagendesigns beitragen. Darüber hinaus können in der Nutzungsspezifikation ggf. auch Informationen über die Effektivität und/oder Schulung und/oder Zertifizierung von Benutzern wie des Bedienpersonals dokumentiert sein, was bspw. für die Bewertung und/oder Einhaltung von Sicherheits- und Qualitätsstandards wesentlich ist.

Alternativ oder zusätzlich kann das erfindungsgemäße Verfahren ein Bereitstellen einer Anwendungsspezifikation umfassen, welche eine zukünftige Anwendung der Anlage spezifiziert.

Die Anwendungsspezifikation kann z. B. detaillierte Informationen darüber enthalten, wie die Anlage für zukünftige Aufträge in verschiedenen Szenarien und/oder für unterschiedliche Prozesse genutzt werden soll. Dies kann Einsätze in verschiedenen Branchen umfassen, wie zum Beispiel in der Chemieindustrie, der Verpackungs- und/oder Lebensmittelverarbeitung oder der Pharmazie. Sie kann auch spezifische Anweisungen für die Anpassung der Anlagenparameter für unterschiedliche Produktionsläufe beinhalten, um eine maximale Effizienz und Produktqualität zu gewährleisten. Darüber hinaus kann die Anwendungsspezifikation Richtlinien für die Integration der Anlage in bestehende Produktionslinien oder für die Erweiterung der Anlage um zusätzliche Komponenten oder Funktionen enthalten. Sie kann auch zukünftig vorgesehene Vorgaben für die Nutzung der Anlage unter speziellen Umweltbedingungen oder für die Einhaltung bestimmter regulatorischer Anforderungen spezifizieren. Letztendlich kann die Anwendungsspezifikation auch Szenarien für Notfälle oder unerwartete Ereignisse abdecken, um sicherzustellen, dass die Anlage auch unter schwierigen Bedingungen zuverlässig funktioniert.

Beispielsweise kann für die industrielle Anlage wie eine Förderanlage die Anwendungsspezifikation zukünftige Anforderungen umfassen, insbesondere Anforderungen für die Anpassung von Geschwindigkeiten wie der Fördergeschwindigkeit und/oder eine Beladungskapazität und/oder eine Integration in automatisierte Sortier- und Verpackungssysteme. Diese Anforderungen können sich aus der Notwendigkeit ergeben, die Anlage für den Transport unterschiedlicher Materialien mit variierenden Gewichten und Volumen zu nutzen, die spezifische Handhabung erfordern. Die Anforderungen können auch die Anpassung der Anlage an schwankende Umgebungstemperaturen und die Einhaltung von Sicherheitsvorschriften in der jeweiligen Branche umfassen.

Ferner kann das erfindungsgemäße Verfahren ein Bereitstellen einer Verfügbarkeitsspezifikation umfassen, welche eine - insbesondere zeitliche und/oder mengenmäßige und/oder technische und/oder logistische - Verfügbarkeit von Ressourcen, insbesondere neuen und/oder bereits in der Anlage vorhandenen Ressourcen und/oder Bauteilen und/oder Werkzeugen und/oder Material, und/oder zumindest einer der Komponenten angibt.

Die Verfügbarkeitsspezifikation kann vorteilhafterweise detaillierte Informationen über die zeitliche, mengenmäßige, technische und/oder logistische Verfügbarkeit von Ressourcen wie Bauteilen, Werkzeugen und Materialien enthalten. Sie kann auch die Verfügbarkeit spezifischer Komponenten der Anlage spezifizieren. Diese Spezifikation kann sicherstellen, dass alle notwendigen Ressourcen zum richtigen Zeitpunkt und in der erforderlichen Menge verfügbar sind, um einen reibungslosen Betrieb und eine effiziente Wartung der Anlage zu gewährleisten. Darüber hinaus kann die Verfügbarkeitsspezifikation technische Anforderungen an die Ressourcen definieren, um die Kompatibilität mit der Anlage und die Einhaltung von Qualitätsstandards zu gewährleisten. Sie kann auch logistische Details wie Lieferzeiten, Lagerbedingungen und/oder Transportmethoden umfassen, die für die Planung und Durchführung der Anlageninstallation und -wartung entscheidend sind.

Sodann kann das erfindungsgemäße Verfahren ein Planen von wenigstens einer Umgestaltungsmaßnahme umfassen. Hierzu kann eine Analyse der bereitgestellten Spezifikationen, insbesondere der Installationsspezifikation und/oder der Nutzungsspezifikation und/oder der Anwendungsspezifikation und/oder der Verfügbarkeitsspezifikation, vorzugsweise hinsichtlich einer Instandhaltung und/oder Erweiterung und/oder Optimierung der industriellen Anlage durchgeführt werden. Die Planung kann (z. B. durch einen Client) auf Basis der Analyse (z. B. durch einen Server) vorgenommen werden. Die Optimierung kann bspw. die Optimierung der OEE der Anlage sein. Anschließend kann ferner die wenigstens eine (geplante) Umgestaltungsmaßnahme initiiert werden.

Die Initiierung der Umgestaltungsmaßnahme kann dabei auf Basis eines Ergebnisses der Planung erfolgen, um die Umgestaltungsmaßnahme zur Optimierung und/oder Umgestaltung der industriellen Anlage einem Benutzer vorzuschlagen oder je nach Analyseergebnis auch zwingend vorzugeben.

Die Planung und/oder Analyse können z. B. durch einen Algorithmus, insbesondere durch wenigstens einen regelbasierten Algorithmus oder durch ein maschinelles Lernsystem, durchgeführt werden. Das Ergebnis der Analyse und/oder Planung kann eine Umgestaltungsmaßnahme sein, die optimal zu den bereitgestellten Spezifikationen passt. Dies kann während der Laufzeit des Verfahrens, insbesondere bei einem regelbasierten Algorithmus, z. B. zumindest teilweise anhand wenigstens einer Lookup-Tabelle ermittelt werden. In dieser Tabelle können Kombinationen von Werten und/oder Wertebereiche, die durch die Spezifikationen angegeben sein können, entsprechenden dafür optimalen Umgestaltungsmaßnahmen zugeordnet sein. Die Zuordnung kann zuvor, bspw. durch eine empirische Untersuchung, so vorgenommen worden sein, dass die zugeordneten Umgestaltungsmaßnahmen optimal zu gegebenen Spezifikationen passen.

Eine jeweilige Umgestaltungsmaßnahme kann durch Werte und/oder Wertebereiche, alternativ oder zusätzlich aber auch durch Ressourcenbezeichnungen und/oder -mengen und/oder Konfigurationen (z. B. von Werkzeugen und/oder Verschleißteilen) und/oder Installationsanweisungen und/oder Bestellanweisungen und/oder weiteren Anweisungen zur Umgestaltung der Anlage und/oder dergleichen definiert sein. Vorzugsweise sind dabei die Ressourcenbezeichnungen und/oder -mengen und/oder Konfigurationen und/oder Installationsanweisungen so definiert, dass sie zur Umsetzung einer Umgestaltung und vorzugsweise Neugestaltung der industriellen Anlage geeignet sind.

Mit anderen Worten kann ein Ergebnis der Planung und/oder die geplante Umgestaltungsmaßnahme geeignet sein, zumindest teilweise eine Umgestaltung und vorzugsweise Neugestaltung der industriellen Anlage anzugeben und/oder zu ermöglichen, die die industrielle Anlage hinsichtlich der bereitgestellten Spezifikation optimiert.

Die Umgestaltung und vorzugsweise Neugestaltung der industriellen Anlage ist insbesondere eine solche Umgestaltung und vorzugsweise Neugestaltung der industriellen Anlage, welche die industrielle Anlage für die bereitgestellten (gegebenen) Spezifikationen anpasst/optimiert. Zu diesem Zweck kann die Umgestaltungsmaßnahme z. B. einen Austausch von Komponenten durch leistungsfähigere Komponenten und/oder einen Einsatz leistungsfähigerer und/oder effizienterer Netzteile und/oder eine Veränderung der Topologie umfassen.

Im Folgenden wird die voranstehend beschriebene Planung der wenigstens einen Umgestaltungsmaßnahme und die Analyse der jeweiligen bereitgestellten Spezifikation auch nur verkürzt als Planung/Planen bzw. Analyse/-Analysieren bezeichnet, um eine entsprechende Bezugnahme zu vereinfachen.

Das Verfahren kann dabei den Vorteil haben, dass eine Gesamtanlageneffektivität automatisiert und zuverlässig verbessert wird. Es kann eine hohe Zuverlässigkeit bei der Identifizierung potenzieller Optimierungen gewährleistet werden, insbesondere durch die Einbeziehung der historischen Nutzung der Anlage und/oder zukünftiger Anforderungen. Dies führt zudem zu einer effizienteren Erkennung von Umgestaltungsbedarf und/oder Planung und Durchführung von Umgestaltungsmaßnahmen, was den Aufwand für Instandhaltung und Erweiterung der Anlage erheblich reduzieren kann.

Das Verfahren kann durch ein oder mehrere Computerprogramme, insbesondere auch zumindest teilweise in der Cloud, oder durch ein computergestütztes System zur automatisierten Umgestaltung der industriellen Anlage vorgesehen sein. Das Computerprogramm und/oder das System können dazu ausgeführt sein, die wenigstens eine Umgestaltungsmaßnahme auszugeben. Dabei kann die Umgestaltungsmaßnahme durch z. B. dadurch ausgegeben werden, dass ein oder mehrere Installations- und/oder Wartungsanweisungen ausgegeben werden, beispielsweise über ein Aufleuchten von LEDs an den Anschlüssen der Verbindungsmodule, über einen Bildschirm oder über Augmented Reality (AR). Dies kann die Umsetzung der Umgestaltungsmaßnahme vereinfachen und Fehler bei der Installation reduzieren, indem visuelle, interaktive und/oder automatisierte Anleitungen bereitgestellt werden.

Die Gesamtanlageneffektivität (GAE) kann als Produkt aus Verfügbarkeitsfaktor, Leistungsfaktor und Qualitätsfaktor definiert sein. Das vorgeschlagene Verfahren kann eine automatisierte Umgestaltung und vorzugsweise Neugestaltung der industriellen Anlage ermöglichen, bei der eine Optimierung der GAE stattfindet. Die Automatisierung kann hierbei z. B. durch die automatisierte Planung und Initiierung der wenigstens einen Umgestaltungsmaßnahme, insbesondere durch eine Ausgabe von Installations- und/oder Wartungsanweisungen, erreicht werden. Ferner kann die Umgestaltungsmaßnahme dazu geeignet sein, dass eine Verbesserung und insbesondere Maximierung der Verfügbarkeit und/oder des Leistungsgrades und/oder der Qualitätsrate erreicht wird.

Durch die Bereitstellung der Spezifikationen, also insbesondere der Installationsspezifikation und/oder der Nutzungsspezifikation und/oder der Anwendungsspezifikation und/oder der Verfügbarkeitsspezifikation, kann eine umfassende Spezifizierung und/oder Dokumentation der industriellen Anlage bereitgestellt werden, was die automatisierte Analyse und Planung von Umgestaltungsmaßnahmen ermöglicht.

Durch die Initiierung der wenigstens einen Umgestaltungsmaßnahme kann die GAE gesteigert werden, wodurch sich die Produktivität und Qualität der industriellen Anlage verbessern lassen. Ferner kann die GAE ggf. nicht nur durch die Maximierung der Verfügbarkeit, des Leistungsgrades und/oder der Qualitätsrate gesteigert werden, sondern alternativ oder zusätzlich auch durch die Implementierung von Datenanalysen und/oder durch maschinelles Lernen trainierte Vorhersagemodellen. Diese können bspw. auf Basis der historischen Benutzung der Anlage und Komponenten und/oder der Verfügbarkeit von Ressourcen identifizieren, welche Optimierungsmaßnahmen geeignet sind.

Beispielsweise kann ein Vorhersagemodelle wie ein Machine-Learning-Algorithmus die Leistungsfaktoren und/oder Qualitätsfaktoren verschiedener Komponenten und/oder Anlagen vergleichen und basierend auf diesen Daten Umgestaltungsstrategie vorschlagen. Dies ermöglicht es Betrieben, fundierte Entscheidungen zu treffen, die nicht nur auf subjektiven Eindrücken oder schriftlichen Dokumenten beruhen, sondern auf empirischen Daten. Auf Basis der vorgeschlagenen Umgestaltungsstrategie kann ferner die Umgestaltungsmaßnahme geplant werden.

Das Initiieren der wenigstens einen Umgestaltungsmaßnahme kann eine Ausgabe mit Angaben zur Ausführung der jeweiligen Umgestaltungsmaßnahme an einen Benutzer umfassen. Die Ausgabe kann z. B. visuell und/oder akustisch erfolgen. Ein Benutzer kann bspw. ein Installateur und/oder Anlagenmechaniker und/oder Elektriker und/oder Werker und/oder Planer und/oder mechanischer Konstrukteur und/oder Entwickler und/oder elektrischer Konstrukteur und/oder SPS-Programmierer und/oder Inbetriebnehmer und/oder Instandhalter und/oder Maschinenführer sein. Es ist möglich, dass der Benutzer das erfindungsgemäße Verfahren dadurch verwendet, dass das Verfahren über einen Computer wie ein Laptop oder Tablet für den Benutzer bereitgestellt wird. Hierzu kann ein Computerprogramm zumindest teilweise durch den Computer und/oder einen weiteren Computer und/oder über eine Cloud ausgeführt werden, um die erfindungsgemäßen Verfahrensschritte durchzuführen.

Ferner kann das Initiieren der wenigstens einen Umgestaltungsmaßnahme eine automatische Ansteuerung und/oder Konfiguration der Bereitstellung von Ressource(n) und insbesondere von Werkzeugen umfassen. Hierzu kann die wenigstens eine geplante Umgestaltungsmaßnahme bspw. eine Konfiguration für die Werkzeuge und/oder eine Angabe für einen Installationsort und/oder eine Kennzeichnung der Ressourcen umfassen, die bei der Anlage verwendet werden sollen. Auch kann es möglich sein, dass die Umgestaltungsmaßnahme eine Modifikation eines Installationsplans, insbesondere der Installationsspezifikation, umfasst und entsprechende Anpassungen wie einen veränderten Schaltplan ausgibt.

Für eine Installation/Instandhaltung/Wartung/Erweiterung der industriellen Anlage können mehrere Ressourcen und Komponenten vorgesehen sein. Zumindest teilweise können den Ressourcen und Komponenten dabei jeweils ein Identifikator zugeordnet sein, durch welche diese eindeutig identifiziert werden können. Der Identifikator kann entsprechend eine Information sein, welche bspw. digital verarbeitet werden kann, um die automatisierte Planung und/oder Analyse zu ermöglichen. Bspw. kann ein jeweiliges Verbindungselement wie ein Kabel und/oder ein Verbindungsmodul den Identifikator dadurch aufweisen, dass ein physisches Identifikationsmittel daran vorgesehen und/oder angebracht ist. Die Komponenten können bspw. Verbindungselemente wie Kabel, Fluidleitungen oder Geräte/-Bauteile umfassen, welche ein funktionaler Teil der Maschine sind. Ferner können die Komponenten Verbindungsmodule aufweisen, über die Geräte der Anlagen wie Aktoren und/oder Sensoren verschaltet und/oder betrieben werden, also vorzugsweise angesteuert und/oder ausgelesen werden.

Damit die automatisierte Planung und/oder Analyse gemäß dem erfindungsgemäßen Verfahren möglich ist, kann es vorgesehen sein, dass bei einer Installation und/oder Wartung und/oder Erweiterung und/oder Umgestaltung der industriellen Anlage einzelne Installationsschritte digital erfasst und dokumentiert werden. Dies kann bspw. das Erfassen der Identifikatoren umfassen, z. B. durch ein Einscannen mit einem Lesegerät, um den Einsatz einer Ressource und/oder Komponente mit diesem Identifikator mitzuteilen. Ferner können verschiedene Wartungs- und/oder Installationsschritte an einem Computer bestätigt werden, um den Fortschritt dieser Tätigkeit zu dokumentieren. Dabei können auch anhand von Benutzereingaben und/oder einer elektronischen Auswertung der Anlage Abweichungen bei der Wartung- und/oder Installation automatisiert dokumentiert werden. Dies kann bspw. eine Abweichung von einer Installationsvorgabe sein. Aus Basis der automatisierten Erfassung und/oder Dokumentation kann sodann die Installationsspezifikation definiert werden.

Für den Betrieb der Komponenten und insbesondere Geräte kann eine Steuerungsvorrichtung wie eine SPS (Speicherprogrammierbare Steuerung) oder eine oder mehrere dezentrale Steuerungen vorgesehen sein, welche über die Verbindungselemente und/oder Verbindungsmodule den elektrischen Betrieb der Komponenten/Geräte steuern können. Hierzu kann die Steuerungsvorrichtung / können die dezentralen Steuerungen mit den Komponenten/Geräten in elektrischer Verbindung stehen.

In einem weiteren Aspekt der Erfindung kann die Planung eine Ermittlung mindestens einer Optimierungsinformation und/oder das Initiieren der wenigstens einen Umgestaltungsmaßnahme eine Ausgabe der mindestens einen Optimierungsinformation umfassen. Die Optimierungsinformation kann zumindest zum Teil auf der Analyse und insbesondere auf einer Simulation einer oder mehrerer Umgestaltungsmaßnahmen basieren, um festzustellen, ob die Umgestaltungsmaßnahme zur Optimierung der Anlage geeignet ist. Die Ausgabe der Optimierungsinformation kann auch maschinenlesbar sein oder zumindest einen maschinenlesbaren Teil umfassen, der vorzugsweise mindestens eine Steueranweisung und/oder ein Steuersignal beinhaltet.

Die Ausgabe der Umgestaltungsmaßnahme und/oder die voranstehend beschriebene maschinenlesbare Ausgabe kann zum zumindest teilweisen Steuern eines technischen Systems oder Prozesses konfiguriert sein, beispielsweise einer teilautonomen Wartungs- und/oder Installationsvorrichtung wie einen Werkstattwagen oder einen Cobot, der Bauteile anreicht, oder einem Industrieroboter. Für solche Vorrichtungen lassen sich bspw. Koordinaten und/oder Bewegungsprofile automatisch ermitteln und auf die Vorrichtung übertragen.

Des Weiteren kann, spezifiziert durch die wenigstens eine Umgestaltungsmaßnahme, eine Anpassung einer Wartungs- und/oder Installationsanleitung und/oder eine Veränderung in der Logistik, wie die von Lagerorten, zumindest teilweise automatisiert angestoßen werden.

Weitere automatisierte Prozesse, um die Analyse und/oder Planung zu ermöglichen und/oder die durch die wenigstens eine Umgestaltungsmaßnahme spezifiziert werden können, können die Lagerhaltung, die Optimierung der Verfügbarkeit und der Kosten von Bauteilen, die Anbindung an ein ERP-System zur Erfassung der Arbeitszeit, Anpassungen des Werkstattlayouts, die Simulation von Alternativbauteilen, die Ermittlung von bauteilspezifischen Zeiten, die Zuteilung von Qualifikationsniveaus, die automatisierte Erstellung einer Arbeits- oder Auslastungsplanung und/oder die Planung der Notwendigkeit von Benutzern mit speziellen Werkzeugen oder Qualifikationen umfassen.

Ferner können durch das erfindungsgemäße Verfahren bei der Planung ggf. verschiedene Komponenten der industriellen Anlage analysiert werden und für die zukünftige Anwendung optimiert werden. Dies hat den Vorteil, dass ungeplante Stillstände und Leerläufe vermieden oder minimiert werden können. Durch das Planen von Instandhaltungsmaßnahmen kann auch die Lebensdauer der Komponenten maximiert werden. Die Identifizierung potentieller Engpässe bei der Planung/Analyse des erfindungsgemäßen Verfahrens, insbesondere durch eine Analyse der verfügbaren Ressourcen (wie Bauteile, Werkzeuge und Material) ermöglicht frühzeitige Beschaffung und stellt sicher, dass ausreichend Material vorhanden ist, um den Produktionsprozess nahtlos fortzuführen.

Es ist weiter möglich, dass durch die automatisierte Umgestaltung eine bessere Planung der Instandhaltungsmaßnahmen erreicht wird und dadurch auch die Verfügbarkeit der Anlagen erhöht werden kann. Dies hat den weiteren Vorteil, dass Wartungspläne besser eingehalten werden können und dadurch Ausfallzeiten minimiert werden können. Durch die Berücksichtigung von technischen und logistischen Engpässen in der Planung können auch Lieferengpässe vermieden oder minimiert werden. Darüber hinaus ist durch die optimierte Nutzung der verfügbaren Komponenten ein geringerer Materialbedarf zu erwarten, was wiederum Kosten senken kann. Die Anwendung des Verfahrens zur automatisierten Umgestaltung einer industriellen Anlage ermöglicht es somit insbesondere, eine optimale Anlagenfunktionalität zu gewährleisten und gleichzeitig die Effektivität der Produktion zu erhöhen.

Gemäß einem weiteren Vorteil kann vorgesehen sein, dass das Planen ferner umfasst: Auswählen von mindestens einer (der) Ressource(n) für eine Optimierung auf Basis der, insbesondere zeitlichen und/oder mengenmäßigen und/oder logistischen und/oder technischen, Verfügbarkeit der mindestens einen Ressource. Dabei kann die mindestens eine Ressource bei einem Einsatz in der industriellen Anlage die industrielle Anlage unter Berücksichtigung a) der bisherigen und/oder b) einer zukünftigen Anwendung (insbesondere gemäß der Anwendungs- und/oder Nutzungsspezifikation) und/oder Benutzung optimieren und/oder ihre Anlagenfunktionalität aufrecht erhalten.

Weiter ist es denkbar, dass das Planen ferner umfasst: Umgestalten, insbesondere Neugestalten im Rahmen eines Re-Engineering, der industriellen Anlage, wenn die Verfügbarkeit der mindestens einen Ressource beschränkt und/oder nicht vorhanden und/oder unzureichend ist.

Auf diese Weise kann bei einer Auswahl für eine Optimierung berücksichtigt werden, ob die jeweilige Ressource zur optimierten Effizienz beitragen kann oder ob möglicherweise andere Ressourcen oder eine Umgestaltung benötigt werden, um das OEE zu steigern. Diese Anpassung der Umgestaltungsmaßnahme basierend mit anderen Worten auf dem verfügbaren Status von Ressourcen (wie Verfügbarkeit) und stellt sicher, dass die Durchführung der Umgestaltungsmaßnahme effizient ist.

Die Auswahl von Ressourcen bei der Planung erfolgt z. B. basierend auf deren mengenmäßige/logistische Verfügbarkeit. Dies ermöglicht die Optimierung der industriellen Anlage, insbesondere bei eingeschränkter Verfügbarkeit einer Ressource. Durch den Fokus auf verfügbare Ressourcen können effiziente und wirtschaftlich sinnvolle Entscheidungen getroffen werden.

Es kann ferner möglich sein, dass das Planen umfasst: Auswählen von mindestens einer (der) Ressource(n) für eine Optimierung auf Basis eines technischen Parameters, vorzugsweise auf Basis einer technischen Anforderung und/oder einer technischen Funktion und/oder eines technischen Zustands, insbesondere auf Basis einer Anlageneffektivität. Dabei kann die mindestens eine Ressource bei einem Einsatz in der industriellen Anlage die industrielle Anlage bezüglich des technischen Parameters und/oder basierend auf der bisherigen und/oder für eine zukünftige Anwendung und/oder Benutzung optimieren.

Weiter kann das Planen umfassen: Umgestalten, insbesondere Neugestalten im Rahmen eines Re-Engineering, der industriellen Anlage, in Abhängigkeit davon ob, insbesondere wenn, die mindestens eine Ressource die Anforderung bezüglich des technischen Parameters, insbesondere eine der bereitgestellten Spezifikationen, vorzugsweise der Installationsspezifikation und/oder der Nutzungsspezifikation und/oder der Verfügbarkeitsspezifikation, erfüllt. Die Umgestaltung kann dabei in Abhängigkeit von der Anforderung erfolgen, z. B. in Abhängigkeit eines Lastfalls. Auch kann die Umgestaltung in Abhängig von einer Verfügbarkeit der Ressource erfolgen, z. B. in Abhängigkeit von einem verfügbaren Werkzeug. Damit wird der Vorteil erzielt, dass die industrielle Anlage hinsichtlich des technischen Parameters optimiert werden kann. Der Optimierungseffekt kann sich dabei auf den Installationsort und die Nutzung von Ressourcen (z. B. Bauteilen und/oder Werkzeugen) erfolgen. Dabei kann das Planen auch als Auswahl einer Ressource erfolgen.

Die Erfindung kann die Verfügbarkeit als Maß für Zuverlässigkeit eines technischen Systems verwenden. Eine Möglichkeit, historische Kennzahlen zu einer Komponente auszuwerten, um eine aktuelle Verfügbarkeit zu ermitteln, ist beispielsweise das Auswerten einer Historie. Dabei können insbesondere Daten aus verschiedenen Quellen wie z.B. Wartungsplänen und -berichten oder von Sensoren auf den Komponenten selbst (mittels erfassungswesentlicher Daten) oder bei einer Nutzung der Anlage herangezogen werden, wobei diese Daten historisch gespeichert sind. Nach Durchführung des Auswertens kann dann eine Bewertung hinsichtlich der Verfügbarkeit durchgeführt werden. Diese Bewertung kann dann zur Planung der Umgestaltungsmaßnahme verwendet werden.

Vorteilhaft ist es darüber hinaus, wenn im Rahmen der Erfindung das Initiieren der wenigstens einen Umgestaltungsmaßnahme wenigstens einen der folgenden Schritte umfasst:

- Initiieren einer Bereitstellung der wenigstens einen oder mehreren Ressourcen, welche zur Umgestaltung der Anlage eingeplant werden,

- Initiieren einer automatischen Navigation eines Transportmittels, z. B. eines Ressourcen- und vorzugsweise Werkzeugwagens, um eine Umgestaltung der industriellen Anlage insbesondere unter Anwendung des Transportmittels zu realisieren, wobei die Navigation vorzugsweise an einem Umgestaltungsablauf orientiert ist, der durch die Umgestaltungsmaßnahme angegeben wird,

**EP 4 686 992 A1**

- Initiieren einer Ausgabe eines Installationshinweises für die Umgestaltung, vorzugsweise für ein Verwenden, vorzugsweise Anschließen der Ressource, wobei die Ausgabe insbesondere für einen Benutzer vorgesehen ist,
- Initiieren einer Ausgabe eines Änderungshinweises hinsichtlich der Aktualisierung der Installationsspezifikation, wobei die Ausgabe insbesondere für einen Benutzer vorgesehen ist, wobei die Installationsspezifikation bevorzugt zur Aufnahme und/oder entsprechend der Umgestaltungsmaßnahme aktualisiert wird,
- Initiieren einer Ausgabe eines Steuersignals an eine Umsetzungseinheit, vorzugsweise an das Transportmittel, zur Umsetzung und/oder Unterstützung der oder zumindest einer der Umgestaltungsmaßnahmen.

Auf diese Weise kann die Effizienz des Optimierungsprozesses erhöht werden, insbesondere, wenn die Bereitstellung der Ressourcen und die Navigation des Transportmittels automatisiert erfolgen. Dies minimiert manuelle Eingriffe und reduziert die Möglichkeit von Fehlern. Außerdem können Installations- und Änderungshinweise bereitgestellt werden, um den Anwender in Bezug auf die Umsetzung der Umgestaltungsmaßnahme zu unterstützen. Dadurch wird der Aufwand verringert und die Genauigkeit bei der Ausführung der Maßnahmen erhöht.

Nach einer weiteren Möglichkeit kann vorgesehen sein, dass das Verfahren ferner umfasst: Bereitstellung einer Information bezüglich Umwelteinflüssen, vorzugsweise von Daten und/oder Metadaten hinsichtlich der Umwelteinflüsse, welche insbesondere einen Einfluss auf die Ressourcen definieren, bspw. der Einfluss von Sonneneinstrahlung auf Verbrauchsmaterialien.

Weiter kann das Verfahren umfassen: Berücksichtigen eines oder mehrerer Einflüsse und/oder einer Kombination von Umwelteinflüssen auf die Ressourcen bei der Planung.

Damit wird ermöglicht, dass die Planung der Umgestaltung der industriellen Anlage unter Berücksichtigung spezifischer Umwelteinflüsse erfolgt. Dies führt zu einer präzisen Optimierung der Ressourcen und erlaubt eine effektivere Nutzung der Anlagenkomponenten. Außerdem können potenzielle Risiken vermieden oder minimiert werden, was die Zuverlässigkeit und Haltbarkeit der Komponenten verbessert.

Vorzugsweise kann vorgesehen sein, dass das Verfahren ferner umfasst: das Bereitstellen der Anwendungsspezifikation, welche eine zukünftige Anwendung der Anlage spezifiziert, z. B. welche Aufträge sind vorgesehen und/oder welche Limits für Maschinenparameter sind erforderlich und/oder welche Anforderungen resultieren aus zukünftigen Aufträgen, z. B. erhalten durch von einer Schnittstelle zu einem ERP-System. Ferner kann das Verfahren umfassen: Berücksichtigen der Anwendungsspezifikation bei der Planung, vorzugsweise bei der Auswahl der Ressourcen. Dies hat den Vorteil, dass eine bessere Anpassung an zukünftige Anforderungen und Aufträge erfolgen kann. Auf diese Weise kann ferner eine optimale Verwendung der verfügbaren Ressourcen gewährleistet werden. Darüber hinaus können potenzielle Engpässe identifiziert und behoben werden, um sicherzustellen, dass genügend Ressourcen für die Ausführung von Aufträgen zur Verfügung stehen.

Das jeweilige Bereitstellen kann dabei z. B. durch einen digitalen Abruf und/oder ein Speichern und/oder Senden und/oder Empfangen und/oder ein Hochladen automatisiert erfolgen.

Es kann im Rahmen der Erfindung vorgesehen sein, dass das Verfahren ferner umfasst: Detektieren eines Aktivierungstriggers, welcher vorzugsweise einen anstehenden Wartungs- und vorzugsweise Instandhaltungsbedarf, wie eine geplante oder prognostizierte Wartung, vorzugsweise Instandhaltung, und/oder einen abweichenden Betriebszustands der Anlage und/oder einer Komponente angibt, und bevorzugt aus einem Predictive bzw. Prescriptive Maintenance System resultiert. Weiter kann ein Initiieren der Planung der wenigstens einen Umgestaltungsmaßname und vorzugsweise auch der weiteren Verfahrensschritte des erfindungsgemäßen Verfahrens im Falle der Detektion vorgesehen sein. Das ermöglicht eine frühzeitige Reaktion auf instandhaltungsbedürftige Zustände der Anlage oder ihrer Komponenten und verbessert die Effizienz des gesamten Instandhaltungsprozesses. Außerdem wird das Risiko unerwarteter Ausfälle minimiert, was zu einer höheren Betriebszuverlässigkeit führt. Es ergibt sich ferner der Vorteil, dass durch das Erfassen eines Aktivierungstriggers frühzeitig auf potenzielle Probleme mit dem Anlagenbetrieb reagiert werden kann und dadurch die Reaktionszeit auf geplante oder prognostizierte Wartungsbedarfe verkürzt wird. Dies führt zu einer effizienteren Instandhaltungsplanung und reduziert den Ausfallzeiten der Anlage, was wiederum zur Erhöhung der Effektivität und Verfügbarkeit beiträgt.

Des Weiteren ist es denkbar, dass das Planen ferner umfasst: Umgestalten, insbesondere Neugestalten im Rahmen eines Re-Engineering, der industriellen Anlage auf Basis eines vorgegebenen Modells, wobei das Modell als ein KI-gestütztes und/oder auf Maschinelles Lernen basierendes (Vorhersage-) Modell bereitgestellt ist, welches dazu ausgeführt ist, ein Betriebsverhalten der Anlage in Abhängigkeit der bereitgestellten Spezifikationen zu optimieren. Auf diese Weise kann das Re-Engineering mit Hilfe eines KI-gestützten Modells besonders zuverlässig optimiert werden.

Es kann im Rahmen der Erfindung vorgesehen sein, dass das Planen ferner umfasst: Analysieren von Ist-Daten der industriellen Anlage und/oder von Komponenten durch einen Vergleich mit entsprechenden historischen Daten, um einen Austauschzyklus zu bestimmen. Weiter kann das Planen umfassen: Einplanen einer Umgestaltungsmaßnahme zur Umgestaltung der industriellen Anlage, vorzugsweise eines Austauschs oder Einbaus einer Ressource, insbesondere eines Bauteils, Werkzeugs, und/oder Verbrauchsmaterials, bevorzugt dann, wenn der bestimmte Austauschzyklus dies erfordert. Dies hat den Vorteil, dass eine optimale Instandhaltungsplanung ermöglicht wird. Der Austausch von Komponenten kann dadurch frühzeitig erkannt werden. Dadurch wird der Bedarf an Ersatzteilen besser planbar und Lagerkosten können gesenkt werden.

Es kann von Vorteil sein, wenn im Rahmen der Erfindung zur Planung der wenigstens einen Umgestaltungsmaßnahme die Analyse der bereitgestellten Installationsspezifikation und/oder Nutzungsspezifikation und/oder Anwendungsspezifikation und/oder Verfügbarkeitsspezifikation hinsichtlich der Instandhaltung und/oder Erweiterung und/oder Optimierung der industriellen Anlage durch eine Auswahl zumindest einer der Ressourcen und/oder durch eine Umgestaltung hinsichtlich zumindest einer der Komponenten durchgeführt wird. Weiter ist es alternativ oder zusätzlich möglich, dass bei der Planung zur Instandhaltung und/oder Erweiterung und/oder Optimierung der industriellen Anlage auf Basis der Analyse aus den Ressourcen, dessen Verfügbarkeit insbesondere durch die Verfügbarkeitsspezifikation angegeben ist, wenigstens eine Ressource ausgewählt wird, insbesondere um die wenigstens eine Umgestaltungsmaßnahme zu definieren. Dabei kann die mindestens eine Ressource zumindest eine der folgenden umfassen:

- einen Aktor, insbesondere ein Motor, vorzugsweise Servomotor, oder Ventil,
- ein Sensor, insbesondere eine Lichtschranke oder ein Magnetsensor,
- ein Kabel, insbesondere ein Datenaustausch- und/oder Energieaustausch- und/oder Feldbus-Kabel, vorzugsweise ein Ethernet-Kabel,
- eine Leitung, insbesondere eine Rohrleitung für Fluide,
- eine Schleppkette,
- ein Verbrauchsmaterial, insbesondere eine Verpackung und/oder eine Komponente und/oder ein Sekundärteil und/oder C-Teile,
- ein Verschleißteil wie ein Lager oder Getriebe oder dergleichen,
- ein Leuchtmittel, vorzugsweise eine Segmentleuchte,
- ein Rohmaterial, vorzugsweise ein Stahlblech oder ein Kunststoffteil.

Es kann ferner möglich sein, dass die Nutzungsspezifikation zumindest eine der folgenden technischen Informationen umfasst:

- Angaben und/oder Daten zu Bewegungszyklen, Betriebsdauer, Drehmomentkurve, Drehzahl, Strom, und/oder Vibrationen, Durchflussmenge, Druck,
- technische Eigenschaften, technische Anforderungen und/oder technische Parameter wie Härtegrad eines Materials, insbesondere eines Metalls, Oberflächengüte, Eignung für Umgebungsbedingungen, Aufwand bezüglich einer Umgestaltung einer Topologie, eines neuen Bauteils oder Werkzeugs, und/oder Typ einer Kommunikationstechnologie.

Weiter ist es denkbar, dass die Verfügbarkeitsspezifikation zumindest eine Information bezüglich eines Lagerbestands, einer Lieferzeit, und/oder Kosten von Ressourcen umfasst.

Weiter kann die Installationsspezifikation zumindest eine der folgenden Angaben umfassen: Umbauzeit, Spezifikation der Nutzung, technische Eigenschaften, Produkteigenschaften wie Härtegrad des Metalls, Oberflächengüte, Eignung für Umgebungsbedingungen, Aufwand von einer Änderung der elektrischen Topologie, Aufwand für den Einsatz eines neuen Bauteils/Werkzeuges, Art der Kommunikationstechnologie (vorzugsweise Feldbus, insbesondere Profinet, EtherCat, EthernetIP, und weitere wie I/O-Link, Single-pair-Ethernet etc.).

Ferner ist es denkbar, dass die Komponenten zumindest eine der folgenden Komponenten umfassen:

- Verbindungsmodule, welche zur, insbesondere dezentralen, Verbindung von Geräten im Feld der industriellen Anlage ausgeführt sind, um eine zentrale oder dezentrale Topologie der industriellen Anlage zu ermöglichen und/oder Automatisierungsfunktionen in der industriellen Anlage bereitzustellen, vorzugsweise über ein Kommunikationssystem.
- Verbindungselemente, vorzugsweise in der Form von Kabeln oder Fluidleitungen, welche die Geräte mit den Verbindungsmodulen verbinden.

Dabei kann die industrielle Anlage gemäß einem Anlagentyp als eine elektrische und/oder pneumatische und/oder hydraulische und/oder fluidtechnische und/oder mechanische Anlage ausgeführt sein. Weiter kann wenigstens ein Netzgerät zur Energieversorgung mit den Verbindungsmodulen elektrisch verbunden sein.

Bevorzugt können zumindest einige der Verbindungsmodule eine dezentrale Steuerung bereitstellen und/oder über ein Feldbussystem mit einer zentralen Steuerung verbunden sein, um zumindest eine Steuerungsprogrammierung für die Geräte auszuführen.

Vorzugsweise kann das Verbindungselement, auch Installationselement bezeichnet, ein Kabel umfassen, wobei das Kabel zum Beispiel mindestens oder genau einen Steckverbinder aufweisen kann, und bevorzugt einseitig konfektioniert sein kann, d.h. einseitig einen weiblichen oder männlichen Stecker und an der anderen Seite ein offenes Ende aufweist. Alternativ kann das Kabel auch zweiseitig konfektioniert sein, d.h. an jeder Seite weist das Kabel einen weiblichen oder männlichen Stecker auf.

Vorzugsweise kann das Verbindungselement, auch Installationselement bezeichnet, eine Fluidleitung umfassen.

Weiter kann die wenigstens eine Umgestaltungsmaßnahme zumindest eine der folgenden umfassen:

- Eine Um- und insbesondere Neugestaltung der Steuerungsprogrammierung,
- Eine Um- und insbesondere Neugestaltung der Automatisierungsfunktionen,
- Eine Um- und insbesondere Neugestaltung der Topologie,
- Eine Um- und insbesondere Neugestaltung der Verbindungen,
- Einen Austausch zumindest eines der Geräte,
- Einen Austausch zumindest eines der Verbindungselemente,
- Eine Transformation des Anlagentyps,
- Eine Anpassung der Energieversorgung, vorzugsweise hinsichtlich einer Spannungshöhe und/oder Stromstärke,
- Eine Anpassung der Kommunikationstechnologie des Kommunikationssystems,
- Eine Änderung wenigstens eines Werkzeuges in einem Magazin,
- Eine Änderung wenigstens eines Verbrauchmaterials,
- Eine Änderung wenigstens eines Verschleißteils,
- Eine Änderung von wenigstens einem Maschinenelement wie eines Lagers.

Zudem ist im Rahmen der Erfindung denkbar, dass die wenigstens eine Umgestaltungsmaßnahme eine automatische Konfiguration einer ausgewählten Ressource und insbesondere Bauteils zur Integration in und/oder zum Verwenden mit die industrielle Anlage umfasst, vorzugsweise eine Konfiguration eines elektrischen und/oder mechanischen Werkzeuges, vorzugsweise eines Bohrers und/oder Fräskopfes und/oder einer Lehre, insbesondere Kugellehre. Bspw. kann das Verfahren verwendet werden, um ein bestimmtes Betriebsmittel (insbesondere ein elektrisches Bauteil) und seine Installation in der Industrieanlage einzustellen. Die Anpassung kann automatisch erfolgen. Dies vereinfacht die Integration in die industrielle Anlage, da bereits vorhandene Komponenten effizienter genutzt werden können. Darüber hinaus ermöglicht die automatisierte Konfiguration einen schnelleren Einsatz von Werkzeug und eine schnellere Anpassung von Ressourcen an die Anlagenumgebung.

Als die Verfügbarkeit kann im Rahmen der Erfindung insbesondere die zeitliche Verfügbarkeit als ein Maß für die Zuverlässigkeit eines technischen Systems wie der industriellen Anlage verstanden werden. Sie wird in der Regel durch den Anteil der Betriebszeit an der Gesamtzeit definiert. Sie gibt an, wie oft und in welchem Umfang ein System für den vorgesehenen Zweck funktionsfähig und betriebsbereit ist.

Die mathematische Definition der Verfügbarkeit (V) lautet:

$$V = \frac{Produktionszeit}{Planbelegungszeit}$$

Die Verfügbarkeit lässt sich auch wie folgt anhand der Zeit definieren, in der ein System verfügbar ist:

$$V = \frac{Gesamtzeit - Gesamtausfallzeit}{Gesamtzeit}$$

Die Gesamtzeit kann sich aus der Betriebszeit und Ausfallzeit zusammensetzen. Die Betriebszeit kann dabei die Zeitspanne bezeichnen, in der das System ordnungsgemäß funktioniert und seinen vorgesehenen Zweck erfüllt. Die Ausfallzeit kann die Zeitspanne bezeichnen, in der das System aufgrund von Störungen, Wartung oder Reparaturen nicht verfügbar ist.

Ferner kann eine Unterscheidung zwischen inhärenter Verfügbarkeit, Betriebsverfügbarkeit und effektiver Verfügbarkeit gemacht werden. Inhärente Verfügbarkeit ($A_i$) berücksichtigt nur die mittlere Zeit zwischen Ausfällen (MTBF) und die mittlere Reparaturzeit (MTTR):

$$A_i = \frac{MTBF}{MTBF + MTTR}.$$

Die Betriebsverfügbarkeit ($A_o$) berücksichtigt die tatsächliche Betriebszeit und alle geplanten sowie ungeplanten Ausfallzeiten:

$$A_o = \frac{Nutzungszeit}{Nutzungszeit + Downtime}.$$

Die effektive Verfügbarkeit ($A_e$) berücksichtigt zusätzlich logistische und administrative Verzögerungen:

$$A_e = \frac{MTBM}{MTBM + MLDT},$$

wobei MTBM die "Mean Time Between Maintenance" und MLDT die "Mean Logistic Delay Time" bezeichnen.
In der Praxis wird die Verfügbarkeit oft als Prozentsatz ausgedrückt. Ein hoher Verfügbarkeitswert (nahe 100 %) zeigt an, dass das System sehr zuverlässig ist und nur selten ausfällt.
Als die Verfügbarkeit kann im Rahmen der Erfindung ferner auch die mengenmäßige Verfügbarkeit verstanden werden. Diese weitere, alternative Definition von Verfügbarkeit bezogen auf eine Menge an Elementen lautet bspw.:

$$V = \frac{Gesamtzahl - Anzahl\ der\ verf\ddot{u}gbaren\ Elemente}{Gesamtzahl}$$

Darüber hinaus kann der Gesamtanlageneffektivität (oder englisch Overall Equipment Effectiveness, OEE; Overall Asset Effectiveness, OAE) eine wichtige Kennzahl insbesondere zur Anlagenoptimierung sein. Mit ihr können die Produktivität und etwaige Verluste von technischen Anlagen oder Maschinen gemessen werden. Je höher die erzielte Gesamtanlageneffektivität einer Anlage, desto größer ist das Leistungspotential, das dem Produktionsprozess zur Verfügung gestellt wird. Die Maximierung der Gesamtanlageneffektivität gehört damit zu den obersten formalen Zielen auch bei der Instandhaltung und Weiterentwicklung von Anlagen.
Die Gesamtanlageneffektivität besteht insbesondere aus den Faktoren Verfügbarkeit (englisch availability), Leistungsgrad (englisch performance rate) und Qualitätsrate (englisch quality rate):

$$OEE = V \cdot L \cdot Q$$

Die Verfügbarkeit setzt sich insbesondere aus geplantem Maschinenstillstand, Produktionsplananpassungen, Funktionsstörungen und Prozessfehlern zusammen. Bei der Qualitätsrate spielen Ausschuss und Nacharbeiten eine Rolle. Der Wertebereich der Gesamtanlageneffektivität liegt zwischen 0 und 1 bzw. zwischen 0 % und 100 %. Je nachdem, ob eine höhere als die geplante Produktionsgeschwindigkeit erreichbar ist, kann der erzielte Leistungsgrad und damit die resultierende Gesamteffektivität auch bei über 100 % liegen.
Die Gesamtanlageneffektivität ist insbesondere eine Kennzahl für ungeplante Verluste einer Anlage. Daher werden im ersten Schritt von der Kalenderzeit (24 Stunden an 7 Tagen in der Woche) die geplanten Stillstände abgezogen. Geplante Stillstände können beispielsweise sein: keine Belegung/Besetzung, geplante Wartung, Arbeitspause, Streik, keine Produktion aus anderen Gründen. Die verbleibende Betriebszeit (Nutzungszeit) ist die Basis für die Gesamtanlageneffektivität und wird damit als 100 % definiert. Von diesen 100 % werden die Leistungs-, Verfügbarkeits- und Qualitätsverluste abgezogen, so dass sich die Gesamtanlageneffektivität der Anlage ergibt.
Der Verfügbarkeitsfaktor ist insbesondere das Verhältnis aus der Zeit bis zum Auftreten eines Fehlers und der Zeit des Ausfalls der Funktion. Der Verfügbarkeitsfaktor kann wie folgt definiert sein:

$$V = \frac{dA}{dA + dW}$$

Dabei ist dA der Durchschnittswert der Zeit zwischen Ausfällen und dW der Durchschnittswert der Wiederherstellungszeit. Der Verfügbarkeitsfaktor reduziert sich durch die Wiederherstellungszeit wie beispielsweise folgende Ereignisse: Warten auf die Instandhaltung, Stromausfall, Fehler an der Anlage (Störung der Funktion).
Der Leistungsfaktor ist insbesondere ein Maß für Verluste durch Abweichung von der geplanten Stückzeit, kleineren Ausfällen (also die Stillstände, die nicht in die Verfügbarkeit eingehen) und Leerläufen.

$$L = \frac{Ist - Leistung}{Soll - Leistung} = \frac{Ist - Produktionsmenge}{Soll - Produktionsmenge}$$

Der Qualitätsfaktor insbesondere ist ein Maß für den Verlust aufgrund defekter und zu überarbeitender Teile. Er kann wie folgt definiert werden:

$$Q = \frac{Gutmenge}{Produktierte\ Menge} = \frac{P - Pn - Pa}{P}$$

Dabei ist P insbesondere die Anzahl der produzierten Teile, Pn die Anzahl der Nacharbeitsteile und Pa die Anzahl der Ausschussteile.

Die Bezeichnung Gesamtanlageneffizienz kann auch synonym zu Gesamtanlageneffektivität (GAE) verwendet werden. Maßnahmen, die den Produktionsausstoß erhöhen, dabei aber überproportional hohe Kosten verursachen, können durchaus effektiv, aber gleichzeitig ineffizient und damit ökonomisch nicht sinnvoll sein. Die GAE kann als Produkt von Verfügbarkeitsfaktor, Leistungsfaktor und Qualitätsfaktor definiert sein. Es ergibt sich ein Prozentwert, der angibt, zu welchem Anteil der geplanten Maschinenlaufzeit tatsächlich den Qualitätskriterien entsprechend produziert wurde.

Ebenfalls Gegenstand der Erfindung ist eine Vorrichtung zur Datenverarbeitung, umfassend Mittel zur Ausführung der Schritte des erfindungsgemäßen Verfahrens. Damit bringt die erfindungsgemäße Vorrichtung zur Datenverarbeitung die gleichen Vorteile mit sich, wie sie ausführlich mit Bezug auf ein erfindungsgemäßes Verfahren beschrieben worden sind.

Ebenfalls Gegenstand der Erfindung ist ein Computerprogramm, insbesondere Computerprogrammprodukt, umfassend Befehle, die bei der Ausführung des Computerprogrammes durch wenigstens einen Computer, d. h. auch durch ein Computersystem wie ein verteiltes System umfassend Server und Client, diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind. Das Computerprogramm kann ferner zumindest teilweise nicht-flüchtig und/oder als Software zum Download und/oder als Cloud-Service und/oder als ausführbares Programm und/oder als Konfigurationsdatei und/oder als Programmbibliothek und/oder als Quelltext und/oder in kompilierter und/oder verschlüsselter und/oder komprimierter Form und/oder in einer Kombination davon vorliegen.

Als der Computer kann eine Datenverarbeitungsvorrichtung, vorzugsweise die erfindungsgemäße Vorrichtung zur Datenverarbeitung, vorgesehen sein.

Die erfindungsgemäße Vorrichtung zur Datenverarbeitung und vorzugsweise der Computer kann dazu ausgebildet sein, das erfindungsgemäße Computerprogramm auszuführen. Hierzu kann die erfindungsgemäße Vorrichtung zur Datenverarbeitung wenigstens einen Prozessor aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls ist es denkbar, dass die erfindungsgemäße Vorrichtung zur Datenverarbeitung zumindest einen integrierten Schaltkreis wie einen Mikroprozessor oder eine Anwendungsspezifische integrierte Schaltung (ASIC) oder ein Anwendungsspezifisches Standardprodukt (ASSP) oder einen digitalen Signalprozessor (DSP) oder einen Field Programmable Gate Array (FPGA) oder dergleichen umfasst. Die erfindungsgemäße Vorrichtung zur Datenverarbeitung bzw. der Computer kann somit auch als eine elektronische Schaltung ausgebildet sein. Die erfindungsgemäße Vorrichtung zur Datenverarbeitung kann ferner wenigstens eine Schnittstelle zum Datenaustausch, z. B. eine Ethernet-Schnittstelle oder eine Schnittstelle für LAN (Local Area Network) oder WLAN (Wireless Local Area Network) oder System-on-a-Chip (SoC) oder eine andere Funkschnittstelle wie bspw. zur Bluetooth- oder Nahfeldkommunikation (NFC) oder eine Softwareschnittstelle wie zu einem ERP-System aufweisen. Ferner kann die erfindungsgemäße Vorrichtung zur Datenverarbeitung als ein oder mehrere Steuergeräte, d. h. auch als ein System aus Steuergeräten, ausgeführt sein. Die erfindungsgemäße Vorrichtung zur Datenverarbeitung kann vollständig oder teilweise auch in einer Cloud und/oder als ein Server vorgesehen sein, um über die Schnittstelle die Datenverarbeitung für eine lokale Anwendung zur Verfügung zu stellen. Entsprechend kann die erfindungsgemäße Vorrichtung zur Datenverarbeitung auch als ein verteiltes System ausgebildet sein, z. B. umfassend wenigstens einen Server und/oder wenigstens einen Client. Auch ist es möglich, dass die erfindungsgemäße Vorrichtung zur Datenverarbeitung als ein mobiles Gerät, wie ein Smartphone, ausgeführt ist.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer und/oder in die erfindungsgemäße Vorrichtung zur Datenverarbeitung integriert sein.

Darüber hinaus kann das erfindungsgemäße Verfahren auch als ein computerimplementiertes Verfahren ausgeführt sein. Alternativ oder zusätzlich können jeder einzelne oder sämtliche der offenbarten Verfahrensschritte optional computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:

Fig. 1:     eine schematische Visualisierung eines Verfahrens, einer Vorrichtung, eines Speichermediums sowie eines Computerprogramms gemäß Ausführungsbeispielen der Erfindung,

Fig. 2:     eine schematische Darstellung einer beispielhaften industriellen Anlage gemäß Ausführungsbeispielen der Erfindung,

Fig. 3:     eine schematische Darstellung eines beispielhaften Prozessablaufs gemäß Ausführungsbeispielen der Erfindung.

In den nachfolgenden Figuren werden für die gleichen technischen Merkmale auch von unterschiedlichen Ausführungsbeispielen die identischen Bezugszeichen verwendet.

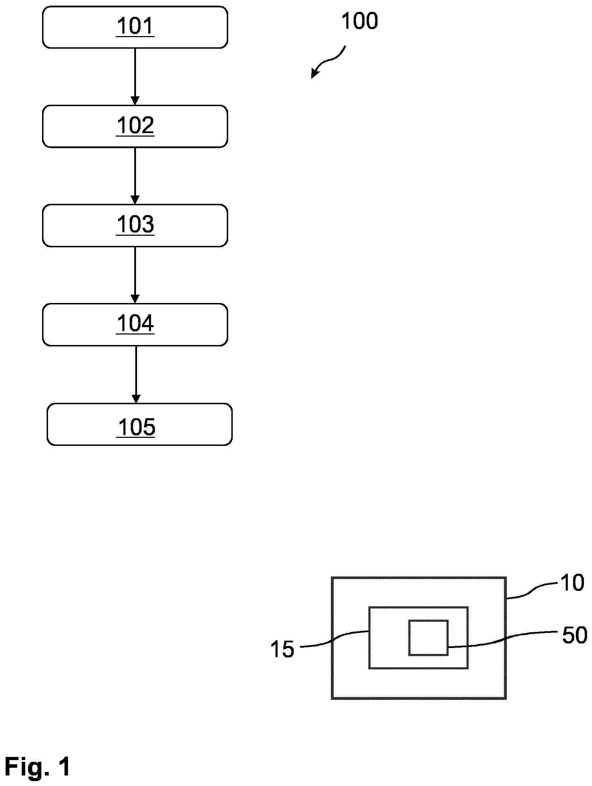

In Fig. 1 sind ein Verfahren 100, eine Vorrichtung 10, ein Speichermedium 15 sowie ein Computerprogramm 50 gemäß Ausführungsbeispielen der Erfindung schematisch dargestellt. Insbesondere zeigt Fig. 1 ein Verfahren 100 zur automatisierten Umgestaltung einer industriellen Anlage 1, bei welcher Komponenten 20 der industriellen Anlage 1 zur Bereitstellung einer Anlagenfunktionalität dezentral miteinander verbunden sind. Die Umgestaltung kann dabei eine zumindest teilweise Neugestaltung der industriellen Anlage umfassen, bei welcher nicht nur Komponenten erneuert oder repariert werden, sondern auch funktionale Änderungen und/oder Erweiterungen und/oder Veränderungen der Topologie vorgenommen werden.

In einem Schritt 101 wird eine Installationsspezifikation bereitgestellt, welche zumindest einen Aufbau der industriellen Anlage 1 und die Verbindung der Komponenten 20 und/oder zugehörige technische Anforderungen und/oder Eigenschaften und/oder die Anlagenfunktionalität spezifiziert. Dies kann bspw. durch einen digitalen Aufbau- und/oder Schaltplan der Anlage 1 ermöglicht werden, welchem weitere technische Spezifikationen wie Betriebsmittelkennzeichen zugeordnet sind.

In einem Schritt 102 wird eine Nutzungsspezifikation bereitgestellt, durch welche eine historische Benutzung der Anlage 1 und der Komponenten 20 dokumentiert sein kann.

Darüber hinaus kann in diesem Schritt 102 auch eine Anwendungsspezifikation bereitgestellt werden, welche eine zukünftige Anwendung der Anlage 1 spezifiziert. Die Anwendungsspezifikation kann dabei auch als ein Teil der Nutzungsspezifikation bereitgestellt sein, und somit durch die Nutzungsspezifikation auch die zukünftige Anwendung der Anlage 1 dokumentiert sein.

In einem Schritt 103 wird sodann eine Verfügbarkeitsspezifikation bereitgestellt. Die Verfügbarkeitsspezifikation gibt eine, vorzugsweise zeitliche und/oder mengenmäßige und/oder technische und/oder logistische, Verfügbarkeit von Ressourcen 20 an, insbesondere Bauteilen und/oder Werkzeuges 24 und/oder Material 25, und/oder zumindest einer der Komponenten 20 der Anlage 1.

Das jeweilige Bereitstellen kann dabei z. B. durch einen digitalen Abruf und/oder ein Speichern und/oder Senden und/oder Empfangen und/oder ein Hochladen automatisiert erfolgen. Die Spezifikationen können z. B. von einem lokalen Datenträger und/oder von einer Eingabeschnittstelle für einen Benutzer und/oder von einem Cloud-Server abgerufen werden.

Es kann dann in einem Schritt 104 wenigstens eine Umgestaltungsmaßnahme geplant werden. Hierzu kann eine Analyse der bereitgestellten Spezifikationen, also insbesondere der Installationsspezifikation und/oder der Nutzungsspezifikation und/oder der Anwendungsspezifikation und/oder der Verfügbarkeitsspezifikation, vorzugsweise hinsichtlich einer Instandhaltung und/oder Erweiterung und/oder Optimierung der industriellen Anlage 1 durchgeführt werden. Die Analyse kann bspw. lokal oder auch in der Cloud durchgeführt werden. Das Ergebnis der Analyse kann dann zur Planung der Umgestaltungsmaßnahme abgerufen und/oder ausgewertet werden. Das Ergebnis der Analyse kann ferner bereits die wenigstens eine Umgestaltungsmaßnahme spezifizieren.

In einem Schritt 105 wird die wenigstens eine Umgestaltungsmaßnahme initiiert. Dies ist bspw. durch eine Ausgabe einer Installationsanweisung an einen Benutzer und/oder durch eine automatische Ansteuerung und/oder Konfiguration der Bereitstellung von Ressource(n) und insbesondere von Werkzeugen möglich.

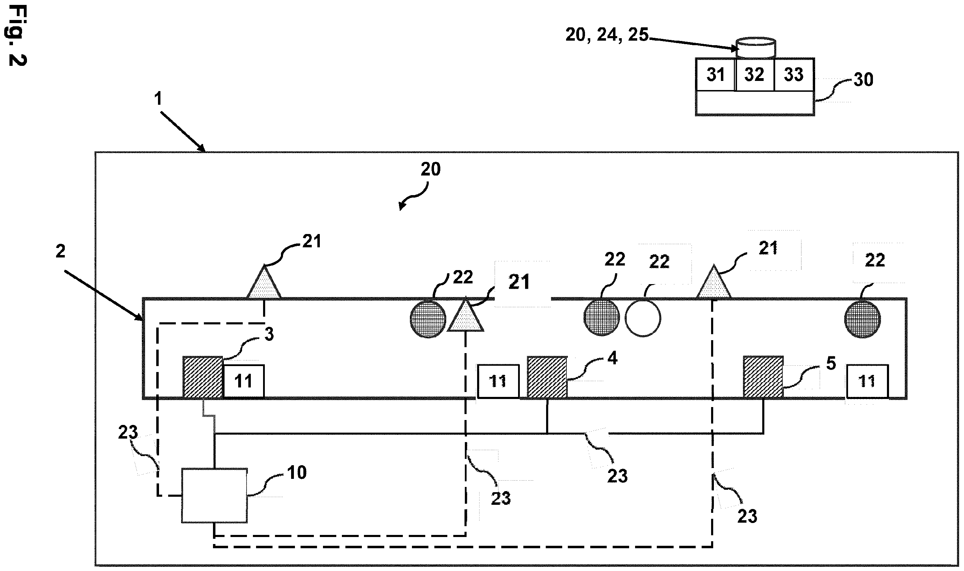

Fig. 2 zeigt in einer schematischen Darstellung eine automatisierte Förderanlage 1, die mehrere Komponenten 20 umfasst. Insbesondere weist die Anlage 1 Förderbänder 2 zur Beförderung von Gegenständen auf. Diese Anlage 1 dient ferner z.B. dem Transport von Gegenständen bzw. Gütern innerhalb einer Produktions- oder Lagerumgebung.

Die Förderanlage 1 umfasst verschiedene Komponenten:

Die Anlage 1 umfasst mehrere Förderbänder 2, die durchgehend miteinander verbunden sind und es ermöglichen, dass die Gegenstände bzw. Güter z. B. über verschiedene Ebenen in der Produktions- oder Lagerumgebung transportiert werden. Die Förderbänder 2 sind mit weiteren Rollen (nicht abgebildet) als Ressourcen 20 bzw. Komponenten ausgestattet, die einen reibungslosen Transport der Gegenstände gewährleisten.

An verschiedenen Stellen der Förderanlage 1 können Antriebsmotoren 3,4,5 vorgesehen sein, die die Bewegung der Förderbänder 2, insbesondere der Rollen, antreiben.

Dezentrale Steuereinheiten 11 können sich in der Nähe der Antriebsmotoren 3,4,5 befinden und sind für die Überwachung und Steuerung des Förderbands 2 zuständig. Sie regeln die Geschwindigkeit und Richtung des Bands 2 und sorgen dafür, dass es reibungslos läuft.

Sensoren 21 sind entlang des Förderbands 2 installiert und dienen zur Erfassung verschiedener Parameter, wie z.B. die Anwesenheit von Waren/Gegenständen auf dem Band, deren Geschwindigkeit und Position. Die Sensoren 21 liefern wichtige Daten an die Steuereinheiten 11 sowie an die zentrale Steuersystem 10, die dann entsprechende Anpassungen vornehmen können.

Aktoren 22 an der Anlage 1 sind dafür verantwortlich, bestimmte Aktionen auf dem Förderband 2 auszuführen, wie z.B. das Stoppen des Bands, das Ausschleusen von Waren/Gegenständen oder das Umleiten des Transportflusses. Sie reagieren auf Signale von den Steuereinheiten 11, dem zentralen Steuersystem 10 oder Sensoren 21.

An einigen Abschnitten der Anlage 1 können Schutzvorrichtungen installiert sein, die dazu dienen, einen Werker, einen Bediener oder eine Person vor beweglichen Teilen der Anlage zu schützen und die Sicherheit am Arbeitsplatz zu gewährleisten.

In der Nähe der Förderbänder 2 können verschiedene Komponenten 20 oder Ressourcen 20 wie z.B. Aktoren 22, Sensoren 21, Kabel 23, dezentrale Steuereinheiten 11 sowie dem zentralen Steuersystem 10 angebracht sein. Diese Komponenten überwachen den Betrieb der Anlage 1, erfassen kontinuierlich oder in regelmäßigen Abständen Informationen bzw. Daten von den installierten bzw. eingesetzten Komponenten und/oder auch zu den jeweiligen transportierten Gegenständen.

Die erfassten Informationen können Angaben und/oder Daten zu Bewegungszyklen, Betriebsdauer, Drehmomentkurve, Drehzahl, Strom, und/oder Vibrationen, sowie technische Eigenschaften, technische Anforderungen und/oder technische Parameter wie Härtegrad eines Materials, insbesondere eines Metalls, Oberflächengüte, Eignung für Umgebungsbedingungen, Aufwand bezüglich einer Umgestaltung einer Topologie, eines neuen Bauteils oder / Werkzeugs, und/oder Typ einer Kommunikations-technologie umfassen.

Ferner können beispielsweise in einer Übersicht als Verfügbarkeitsspezifikation Informationen bezüglich eines Lagerbestands, einer Lieferzeit, Kosten von Ressourcen hinterlegt sein.

In einem Ausführungsbeispiel gemäß der abgebildeten Anlage 1 in Fig. 2 kann das zentrale Steuersystem 10 und/oder eine Betriebssoftware der Anlage 1 einen abweichenden Betriebszustand einer Komponente bzw. Ressource 20 feststellen. So kann z.B. festgestellt werden, dass ein Sensor 21 fehlerhafte oder keine Messdaten liefert bzw. erfasst und an die Steuereinheit 11 sendet. Diese detektierte Anomalie kann als Trigger dann eine Initiierung des erfindungsgemäßen Verfahrens, d.h. vorzugsweise dem Planen einer Umgestaltungsmaßnahme, bewirken.

Zunächst kann in einem hinterlegten Schaltplan als bereitgestellte Installationsspezifikation geprüft werden, wo die fehlerhafte Ressource 20 installiert ist und beispielsweise mit welchen weiteren Komponenten der Anlage 1 eine Verbindung besteht bzw. von welchem Stromversorgungsmodul der Sensor mit Energie versorgt wird. Ferner kann ebenso ermittelt werden wie der Sensor 11 in der Topologie der Anlage 1 verschaltet ist.

Ferner kann auf die bisherigen Betriebsdaten des fehlerhaften Sensors 21 für eine Analyse und Planung mittels einer Nutzungsspezifikation zugegriffen werden. So können die vom Sensor 21 erfassten bzw. historischen Daten überwacht und für weitere Planungen analysiert werden, um Abweichungen von den erwarteten Normwerten frühzeitig zu erkennen. Auf Basis der Analyse können verschiedene Maßnahmen zu einer ggf. notwendigen Umgestaltung abgeleitet werden. Wenn beispielsweise eine Fehlfunktion oder eine Drift im Messverhalten festgestellt wird, kann dies beispielsweise eine Kalibrierung des Sensors 21 als Instandhaltungsmaßnahme oder sogar einen Austausch als Umgestaltungsmaßnahme erforderlich machen. Im letzteren Fall kann dann analysiert werden, ob der Sensor 21 durch einem baugleichen Sensortyp oder durch einen anderen Sensortyp ausgetauscht werden sollte. Dazu können bei der Analyse weitere hinterlegte oder vorgegebene Informationen zu einer derzeitigen und/oder zukünftigen Verwendung der Anlage 1 berücksichtigt und dann entsprechend dem Analyseergebnis ausgewählt und als Umgestaltungsmaßnahme für den Sensor 21 der Förderanlage 1 eingeplant werden.

Bei der Planung der weiteren Maßnahmen werden ferner Informationen bezüglich einer Verfügbarkeit des Sensors 21 bzw. Sensortyps im Lagerbestand über eine Schnittstelle zu einem Lagerverwaltungssystem (ERP-System) gesammelt, um festzustellen, ob der Ersatzsensor im Lager verfügbar ist. Sollte die nicht der Fall sein, kann dann beispielsweise eine funktionsgleicher Sensor als Ersatz gesucht und ausgewählt werden.

Im Rahmen der Planung könnte ferner bei der Auswahl eines anderen, aber funktionsgleichen Sensors geprüft werden, welche Auswirkungen dessen Einsatz in der Anlage 1 bewirken würde. Dabei würden entsprechende Planungsvorgaben, technische Anforderungen und/oder technische Parameter für die Anlage 1 in die Planung inkludiert werden, um eine optimale Auswahl für die Anlage1 treffen zu können.

Als Ergebnis einer solchen Planung könnten dann z.B. ein oder mehrere Vorschläge für mögliche Umgestaltungsmaßnahmen wie beispielsweise eine Sensorkalibrierung oder ein Austausch des Sensors 21 präsentiert werden.

Ferner können die Vorschläge für mögliche Umgestaltungsmaßnahmen der Anlage 1 auf Basis eines Modells erfolgen, wobei das Modell als ein KI-gestütztes und/oder auf Maschinelles Lernen basierendes Modell bereitgestellt sein kann. Dieses Modell kann Algorithmen umfassen, welche so ausgeführt sind, ein Betriebsverhalten der Anlage 1 in Abhängigkeit der bereitgestellten Spezifikationen zu optimieren.

In einem anderen Ausführungsbeispiel für die in Fig. 2 dargestellte Förderbandanlage 1 kann als ein Aktivitätstrigger für das Planen einer Umgestaltungsmaßnahme ein Wartungszeitpunkt einer Anlagenkomponente wie beispielsweise einem Antriebsmotor 3,4,5 festgestellt worden sein. Zunächst kann in der Analysephase eine detaillierte Prüfung aller verfügbaren technischen Informationen bezüglich des Antriebsmotors 3,4,5 als Komponente 20 der Anlage 1 durchgeführt, um z. B. Anzeichen von Verschleiß, Beschädigungen oder Verunreinigungen zu identifizieren. In Abhängigkeit der Analyse könnte eine Reinigung des Antriebsmotors 3,4,5 vorgeschlagen werden, um Schmutz, Ablagerungen und Fremdkörper zu entfernen, die die Leistung des Antriebsmotors 3,4,5 beeinträchtigen könnten. Ferner kann eine Umgestaltungsmaßnahme vorschlagen, dass bewegliche Teile des Antriebsmotors 3,4,5 geschmiert werden sollen, um Reibung und Verschleiß zu minimieren. Dazu würden entsprechende Verbrauchsmaterialien 25 bereitgestellt und zur Anlage 1 befördert werden. Zudem kann ein weiter Vorschlag sein, dass bei der Wartung elektrische Verbindungen 23 überprüft werden und bei Bedarf gesichert oder erneuert werden, um die elektrische Integrität zu gewährleisten.

Es könnte in einem anderen Ausführungsbeispiel vorgeschlagen werden, dass ein Austausch von Verschleißteilen, die eine begrenzte Lebensdauer haben, wie z.B. Dichtungen, Filter oder Dichtungen durchgeführt werden soll. Abschließend könnte beispielsweise ein Funktionstest des Antriebsmotors 3,4,5 durchgeführt werden, um sicherzustellen, dass dieser nach der Wartung ordnungsgemäß arbeitet. Alle durchgeführten Maßnahmen und Beobachtungen werden in einem digitalen Wartungsprotokoll dokumentiert, um eine lückenlose Nachverfolgbarkeit und zukünftige Planungen zu ermöglichen.

Somit können diese Daten auch zur Optimierung der Anlage 1 genutzt werden, indem sie zur Anpassung der Betriebsparameter herangezogen werden. Durch diese präventiven und reaktiven Maßnahmen kann die Zuverlässigkeit und Effizienz der industriellen Anlage 1 erhöht werden.

In einem anderem Ausführungsbeispiel wird ein Transportmittel 30 für die Umgestaltung einer Förderbandanlage wie in Fig. 2 dargestellt.

Das Transportmittel 30, wie beispielsweise ein Werkstattwagen 30, der z.B. ferngesteuert oder autonom betrieben werden kann, kann zur Effizienzsteigerung in industriellen Anlagen 1 zum Einsatz vorgesehen sein. Der Wagen 30 ist mit Sensoren 31, einem Navigationssystem 32 und einer Roboterarm 33 ausgestattet, um benötigte Ressourcen 20, Komponenten, Bauteile oder Verbrauchsmaterialien 25 selbstständig zu transportieren und an der Anlage 1 zu installieren.

Die Förderbandanlage 1 ist mit Sensoren 21 ausgestattet, die kontinuierlich den Zustand der Komponenten 20 überwachen. So kann ein Sensor 21 erkennen, dass eine bestimmte Rolle des Förderbands 2 verschlissen ist und ausgetauscht werden sollte (Aktivierungstrigger).

Der Sensor 21 sendet vorzugsweise eine Meldung (Wartungsalarm) an das zentrale Steuer- und Wartungssystem 10 oder an die Steuereinheit 11. Damit kann der gemeldete Bedarf an einem neuen Bauteil 20 registriert werden und ein Auftrag für den Werkstattwagen 30 erstellt und beispielsweise per Steuersignal initiiert werden.

Der Werkstattwagen 30 kann sich in einer zentralen Werkstatt oder einem Lager befinden. Nach Erhalt des Wartungsauftrags wird er automatisch mit der erforderlichen Ressource 20 wie z.B. einem Bauteil, einem Werkzeug 24, oder einem Verbrauchsmaterial 25 bestückt. Ein Roboterarm 33 oder ein Lagermitarbeiter lädt die notwendigen Ressourcen 20, insbesondere die spezifische Rolle 25 und ggf ein notwendiges Werkzeug 24 auf den Wagen 30 wie in Fig. 2 dargestellt.

Eine kurze Prüfung kann durchgeführt werden, um sicherzustellen, dass das richtige Bauteil 20 geladen wurde und der Wagen 30 betriebsbereit ist. Danach wird der Auftrag freigegeben und der Wagen 30 beginnt seine autonome Fahrt zur Förderbandanlage1 .

Der Werkstattwagen 30 nutzt dabei sein integriertes Navigationssystem 32 (GPS und LIDAR) zusammen mit einer vorab programmierten Karte der Anlage 1 in der Produktionsumgebung, um die optimale Route zur defekten Komponente zu berechnen. Dabei kann er Hindernisse umgehen und Sicherheitszonen berücksichtigen.

Der Wagen 30 fährt autonom durch die Anlage 1, folgt den vorgegebenen Wegen und stoppt an allen Kreuzungen, um Kollisionen zu vermeiden. Er kann ferner kontinuierlich Statusmeldungen an das zentrale Wartungssystem 10 bzw. die Steuerzentrale senden.

Wenn der Werkstattwagen 30 die Position der defekten Rolle 25 erreicht, kann er sich mithilfe seiner Sensoren 31 und Kameras präzise neben der Komponente 20 positionieren.

Mittels des Roboterarms 33 des Werkstattwagens 30 wird die defekte Rolle 25 entfernt und in einem speziellen Fach am Wagen 30 abgelegt. Anschließend nimmt der Arm 33 die neue Rolle und installiert sie an der vorgesehenen Stelle.

Nach der Installation überprüft der Werkstattwagen 30 die Funktionalität der neuen Rolle 25 durch Tests. Wenn alles in Ordnung ist, sendet er eine Abschlussmeldung an das zentrale Steuer- und Wartungssystem 10. Dieses kann dann die Anlage 1 zur weiteren Nutzung freigeben.

Der Werkstattwagen 30 navigiert selbstständig zurück zur zentralen Werkstatt. Zurück in der Werkstatt wird das defekte Bauteil entladen und der Wagen 30 wird auf den nächsten Einsatz vorbereitet. Eventuell wird seine Energieversorgung, insbesondere seine Batterien, aufgeladen oder durch einen kurzen Wartungscheck überprüft, um sicherzustellen, dass er für zukünftige Transporte und Aufträge bereit ist.

Alle durchgeführten Schritte, von der Identifikation des Wartungsbedarfs bis zur Rückkehr des Werkstattwagens 30, werden automatisiert dokumentiert. Diese Dokumentation hilft bei der Nachverfolgung und Analyse der Wartungsprozesse, um kontinuierliche Verbesserungen zu ermöglichen.

Durch den Einsatz eines ferngesteuerten und autonom agierenden Werkstattwagens 30 kann die Effizienz und Genauigkeit von Wartungsarbeiten in industriellen Anlagen 1 erheblich gesteigert werden. Der gesamte Prozess von der Identifikation des Problems über die autonome Navigation und den Austausch des Bauteils bis hin zur Dokumentation und Rückkehr ist durchgehend automatisiert, was die Ausfallzeiten der Anlage 1 minimiert und die Produktivität maximiert.

In einem anderen Ausführungsbeispiel kann bei der Feststellung eines abweichenden Betriebszustands oder eines Wartungszeitpunkts eine Anlageneffektivität (OEE) der Förderbandanlage 1 in Fig. 2 als Re-Engineering Maßnahme optimiert werden.

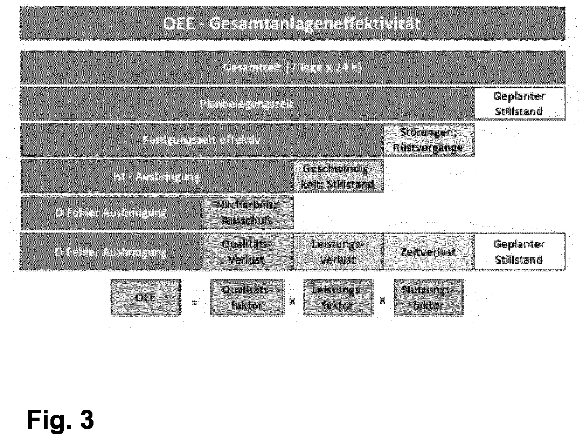

Wie ferner in Fig. 3 dargestellt kann sich die OEE dabei aus Faktoren wie einem Qualitätsfaktor, einem Leistungsfaktor und/oder einem Nutzungsfaktor zusammensetzen. In der schematischen Darstellung in Fig. 3, werden die verschiedenen Aspekte, die in die Berechnung der OEE einfließen, als Anwendungsmodell dargestellt.

Auf Basis der bereitgestellten bzw. verfügbaren Informationen aus Aufbau der Anlage, Betriebsdaten, und weiteren Produktionsparametern kann eine aktuelle Anlageneffektivität (OEE) hinsichtlich Gesamtzeit, Planungsbelegungszeit, Produktionszeit, Ist-Ausbringung und Fehler-Ausbringung ermittelt werden.

Die Gesamtzeit beträgt beispielsweise 7 Tage x 24 Stunden, was 168 Stunden pro Woche entspricht. Diese Zeit beinhaltet alle verfügbaren Stunden für den Betrieb der Förderbandanlage 1.

Die Planbelegungszeit ist die Zeit, in der die Anlage geplant genutzt werden kann. Zum Beispiel könnte die Förderbandanlage 1 für 120 Stunden pro Woche eingeplant sein, wobei 48 Stunden als geplanter Stillstand (Wartung, Pausen, usw.) berücksichtigt werden.

Die effektive Produktionszeit wäre z.B. die tatsächliche Betriebszeit der Anlage 1 abzüglich der Störungen und Rüstvorgänge. Angenommen, es gibt 10 Stunden pro Woche für Umrüstungen und unvorhergesehene Störungen, dann wäre die effektive Produktionszeit 110 Stunden.

Die Ist-Ausbringung wäre dann die tatsächliche Produktionsmenge, die von der Anlage 1 in der effektiven Fertigungszeit erreicht wird. Hierbei sind Geschwindigkeitsverluste und ungeplante Stillstände zu berücksichtigen. Wenn die Anlage z.B. 90% ihrer maximalen Kapazität läuft, könnte die Ist-Ausbringung 99 Stunden betragen.

Hierbei wird die Qualität der produzierten Ware gemessen. Angenommen, es gibt 5% Ausschuss und Nacharbeit, was die fehlerfreie Ausbringung auf 94,05 Stunden reduziert.

Dann würden die jeweiligen Faktoren hinsichtlich Leistung, Qualität und Nutzung bestimmt, um Fehlerquellen zu identifizieren und Maßnahmen zur Optimierung auszuwählen und vorzuschlagen.

So könnte bei einer ermittelten aktuellen Qualität von z. B.: 94,05 Stunden / 110 Stunden = 0,855 (85,5%) als Optimierungs- bzw. Umgestaltungsmaßnehme für eine Auswahl vorgeschlagen werden, eine Einführung eines Qualitätssicherungssystems vorzusehen, um den Ausschuss zu reduzieren. Dies könnte beispielsweise durch eine verbesserte Sensorik 21 und regelmäßige Wartung erreicht werden. Ziel dieser Umgestaltung könnte z.B. eine Reduktion des Ausschusses auf 2%, was die fehlerfreie Ausbringung auf 107,8 Stunden erhöht und den Qualitätsfaktor auf 0,98 (98%) anhebt.

Die aktuelle Leistung der Anlage 1 könnte 99 Stunden / 110 Stunden = 0,9 (90%) betragen. Im Rahmen der Planung einer Optimierungsmaßnahme könnte zur Auswahl stehen, dass eine Erhöhung der Betriebsgeschwindigkeit durch einen Austausch oder ein Upgrade der Antriebsmotoren 3,4,5 und der Steuereinheiten 11 vorgesehen ist, um die Fördergeschwindigkeit zu maximieren. Eine Zielgeschwindigkeit von 95% der maximalen Kapazität würde z.B. die Ist-Ausbringung auf 104,5 Stunden und den Leistungsfaktor auf 0,95 (95%) erhöhen.

Die aktuelle Nutzung könnte 110 Stunden / 120 Stunden = 0,917 (91,7%) betragen. Im Rahmen der Planung einer Optimierungsmaßnahme könnte zur Auswahl stehen, dass eine Minimierung der geplanten Stillstandszeiten durch eine verbesserte Planung und präventive Wartung vorzusehen sei. Eine Reduktion der Umrüstzeiten und die Einführung von Schnellwechselvorrichtungen könnten die effektive Fertigungszeit auf 115 Stunden und den Nutzungsfaktor auf 0,958 (95,8%) erhöhen.

Auf Basis dieser Faktoren könnte dann eine Bestimmung einer optimierten OEE erfolgen:

Qualitätsfaktor: 0,98

Leistungsfaktor: 0,95

Nutzungsfaktor: 0,958

Optimierte OEE = 0,98 x 0,95 x 0,958 = 0,892 (89,2%)

Durch gezielte Maßnahmen zur Reduktion von Qualitätsverlusten, Leistungsoptimierung und Verbesserung der Nutzungseffizienz kann die OEE der Förderbandanlage damit signifikant gesteigert werden. Dies führt zu einer höheren Produktivität, weniger Ausschuss und insgesamt geringeren Betriebskosten.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

Bezugszeichenliste

| | |
|---|---|
| 1 | Anlage, industrielle Anlage, Förderbandanlage |
| 2 | Förderband, mit Rollen |
| 3,4,5 | Antriebsmotor |

| | |
|---|---|
| 10 | zentrales Steuersystem |
| 11 | Steuereinheit, dezentral |
| 15 | Speichermedium |

| | |
|---|---|
| 20 | Komponente, Ressource, Bauteil |
| 22 | Aktor |
| 23 | Kabel |
| 24 | Werkzeug |
| 25 | Verbrauchsmaterial |
| 21,31 | Sensor |

| | |
|---|---|
| 30 | Transportmittel, Umsetzungseinheit, Werkstattwagen |
| 32 | Navigationssystem |
| 33 | Roboterarm |

| | |
|---|---|
| 50 | Computerprogramm |

| | |
|---|---|
| 100 | Verfahren |
| 101 | erster Verfahrensschritt |
| 102 | zweiter Verfahrensschritt |
| 103 | dritter Verfahrensschritt |
| 104 | vierter Verfahrensschritt |
| 105 | fünfter Verfahrensschritt |

**Patentansprüche**

1. Verfahren (100) zur automatisierten Umgestaltung einer industriellen Anlage (1), bei welcher Komponenten (20) der industriellen Anlage (1) zur Bereitstellung einer Anlagenfunktionalität miteinander verbunden sind, umfassend:

   - Bereitstellen (101) einer Installationsspezifikation, welche zumindest einen Aufbau der industriellen Anlage (1) und die Verbindung der Komponenten (20) und/oder zugehörige technische Anforderungen und/oder Eigenschaften und/oder die Anlagenfunktionalität spezifiziert,
   - Bereitstellen (102) einer Nutzungsspezifikation, durch welche eine historische Benutzung der industriellen Anlage (1) und Komponenten (20) und/oder von Ressourcen der industriellen Anlage (1) dokumentiert ist, und/oder einer Anwendungsspezifikation, welche eine zukünftige Anwendung der industriellen Anlage (1) spezifiziert,

- Bereitstellen (103) einer Verfügbarkeitsspezifikation, welche eine Verfügbarkeit von Ressourcen (20), insbesondere neuen und/oder den bereits in der industriellen Anlage (1) vorhandenen Ressourcen (20) und/oder Bauteilen (20) und/oder Werkzeugen (24) und/oder Material, und/oder zumindest einer der Komponenten (20) angibt,

- Planen (104) von wenigstens einer Umgestaltungsmaßnahme, auf Basis einer Analyse der bereitgestellten Installationsspezifikation und/oder Nutzungsspezifikation und/oder Anwendungsspezifikation und/oder Verfügbarkeitsspezifikation hinsichtlich einer Instandhaltung und/oder Erweiterung und/oder Optimierung der industriellen Anlage (1),

- Initiieren (105) der wenigstens einen Umgestaltungsmaßnahme.

2.  Verfahren (100) nach Anspruch 1,
    **dadurch gekennzeichnet,**
    **dass** das Planen (104) ferner umfasst:

    - Auswählen von mindestens einer Ressource (20) für die Optimierung auf Basis der Verfügbarkeit der mindestens einen Ressource (20), wobei die mindestens eine Ressource (20) bei einem Einsatz in der industriellen Anlage (1) die industrielle Anlage (1) unter Berücksichtigung der bisherigen und/oder einer zukünftigen Anwendung und/oder Benutzung optimiert und/oder ihre Anlagenfunktionalität aufrecht erhält,
    - Umgestalten, insbesondere Neugestalten im Rahmen eines Re-Engineering, der industriellen Anlage (1), wenn die Verfügbarkeit der mindestens einen Ressource (20) beschränkt und/oder nicht vorhanden und/oder unzureichend ist.

3.  Verfahren (100) nach einem der vorhergehenden Ansprüche,
    **dadurch gekennzeichnet,**
    **dass** das Planen (104) ferner umfasst:

    - Auswählen von mindestens einer Ressource (20) für die Optimierung auf Basis eines technischen Parameters, vorzugsweise auf Basis einer technischen Anforderung und/oder einer technischen Funktion und/oder eines technischen Zustands, insbesondere auf Basis einer Anlageneffektivität, wobei die mindestens eine Ressource (20) bei einem Einsatz die industrielle Anlage (1) bezüglich des technischen Parameters und/oder basierend auf der bisherigen und/oder für eine zukünftige Anwendung und/oder Benutzung optimiert,
    - Umgestalten, insbesondere Neugestalten im Rahmen eines Re-Engineering, der industriellen Anlage (1), wenn die mindestens eine Ressource die Anforderung bezüglich des technischen Parameters einer der bereitgestellten Spezifikationen, vorzugsweise der Installationsspezifikation und/oder Nutzungsspezifikation und/oder Verfügbarkeitsspezifikation, erfüllt.

4.  Verfahren (100) nach einem der vorhergehenden Ansprüche,
    **dadurch gekennzeichnet,**
    **dass** das Initiieren (105) der wenigstens einen Umgestaltungsmaßnahme wenigstens einen der folgenden Schritte umfasst:

    - Initiieren einer Bereitstellung der wenigstens einen oder mehreren Ressourcen (20), welche zur Umgestaltung der Anlage (1) eingeplant werden,
    - Initiieren einer automatischen Navigation eines Transportmittels (30), um eine Umgestaltung der industriellen Anlage (1) zu realisieren,
    - Initiieren einer Ausgabe eines Installationshinweises für die Umgestaltung, vorzugsweise für ein Anschließen der Ressource,
    - Initiieren einer Ausgabe eines Änderungshinweises hinsichtlich der Aktualisierung der Installationsspezifikation,
    - Initiieren einer Ausgabe eines Steuersignals an eine Umsetzungseinheit (30), vorzugsweise an das Transportmittel (30), zur Umsetzung oder Unterstützung der oder zumindest einer der Umgestaltungsmaßnahmen.

5.  Verfahren (100) nach einem der vorhergehenden Ansprüche,
    **dadurch gekennzeichnet,**
    **dass** das Verfahren (100) ferner umfasst:

    - Bereitstellen einer Information bezüglich Umwelteinflüssen, vorzugsweise von Daten und/oder Metadaten hinsichtlich der Umwelteinflüsse, welche insbesondere einen Einfluss auf die Ressourcen (20) definieren,
- Berücksichtigen eines oder mehrerer Einflüsse und/oder einer Kombination von Umwelteinflüssen auf die Ressourcen (20) bei der Planung (104).

6. Verfahren (100) nach einem der vorhergehenden Ansprüche,
   **dadurch gekennzeichnet,**
   **dass** das Verfahren (100) ferner umfasst:

   - das Bereitstellen der Anwendungsspezifikation, welche eine zukünftige Anwendung der Anlage (1) spezifiziert,
   - Berücksichtigen der Anwendungsspezifikation bei der Planung (104), vorzugsweise bei der Auswahl der Ressourcen (20).

7. Verfahren (100) nach einem der vorhergehenden Ansprüche,
   **dadurch gekennzeichnet,**
   **dass** das Verfahren (100) ferner umfasst:

   - Detektieren (103) eines Aktivierungstriggers, welcher vorzugsweise einen anstehenden Instandhaltungsbedarf und/oder einen abweichenden Betriebszustands der Anlage (1) und/oder einer Komponente (20) angibt, und bevorzugt aus einem Predictive oder Prescriptive Maintenance System resultiert,
   - Initiieren der Planung (104) der wenigstens einen Umgestaltungsmaßname im Falle der Detektion des Aktivierungstriggers.

8. Verfahren (100) nach einem der vorhergehenden Ansprüche,
   **dadurch gekennzeichnet,**
   **dass** das Planen (104) ferner umfasst:

   - Umgestalten, insbesondere Neugestalten im Rahmen eines Re-Engineering, der industriellen Anlage (1) auf Basis eines vorgegebenen Modells, wobei das Modell als ein KI-gestütztes und/oder auf Maschinelles Lernen basierendes Modell bereitgestellt ist, welches dazu ausgeführt ist, ein Betriebsverhalten der Anlage (1) in Abhängigkeit von den bereitgestellten Spezifikationen zu optimieren.

9. Verfahren (100) nach einem der vorhergehenden Ansprüche,
   **dadurch gekennzeichnet,**
   **dass** das Planen (104) ferner umfasst:

   - Analysieren von Ist-Daten der industriellen Anlage (1) und/oder von Komponenten (20) durch einen Vergleich mit entsprechenden historischen Daten, um einen Austauschzyklus zu bestimmen,
   - Einplanen einer Umgestaltungsmaßnahme zur Umgestaltung der industriellen Anlage (1), vorzugsweise eines Austauschs oder Einbaus einer Ressource (20), insbesondere eines Bauteils (20), Werkzeugs (24), und/oder Verbrauchsmaterials (25), wenn der bestimmte Austauschzyklus dies erfordert.

10. Verfahren (100) nach einem der vorhergehenden Ansprüche,
    **dadurch gekennzeichnet,**

    **dass** zur Planung (104) der wenigstens einen Umgestaltungsmaßnahme die Analyse der bereitgestellten Installationsspezifikation und/oder Nutzungsspezifikation und/oder Anwendungsspezifikation und/oder Verfügbarkeitsspezifikation hinsichtlich der Instandhaltung und/oder Erweiterung und/oder Optimierung der industriellen Anlage (1) durch eine Auswahl zumindest einer der Ressourcen (20) und/oder durch eine Umgestaltung hinsichtlich zumindest einer der Komponenten (20) durchgeführt wird, und/oder
    **dass** bei der Planung (104) zur Instandhaltung und/oder Erweiterung und/oder Optimierung der industriellen Anlage (1) auf Basis der Analyse aus den Ressourcen (20), dessen Verfügbarkeit durch die Verfügbarkeitsspezifikation angegeben ist, wenigstens eine Ressource (20) ausgewählt wird, um die Umgestaltungsmaßnahme zu definieren,
    wobei die mindestens eine Ressource (20) zumindest eine der folgenden umfassen kann:

    - einen Aktor (22), insbesondere einen Motor, vorzugsweise Servomotor,
    - ein Sensor (21,31), insbesondere eine Lichtschranke oder ein Magnetsensor,
    - ein Kabel (23), insbesondere ein Datenaustausch- und/oder Energieaustausch- und/oder Feldbus-Kabel, vorzugsweise ein Ethernet-Kabel,
- eine Leitung, insbesondere eine Rohrleitung für Fluide,
- eine Schleppkette,
- ein Verbrauchsmaterial (25), insbesondere eine Verpackung und/oder eine Komponente und/oder ein Sekundärteil und/oder C-Teile,
- ein Verschließteil wie ein Lager oder Getriebe oder dergleichen,
- ein Leuchtmittel, vorzugsweise eine Segmentleuchte,
- ein Rohmaterial, vorzugsweise ein Stahlblech oder ein Kunststoffteil.

**11.** Verfahren (100) nach einem der vorhergehenden Ansprüche,
**dadurch gekennzeichnet,**

**dass** die Nutzungsspezifikation zumindest eine der folgenden technischen Informationen umfasst:

- Angaben und/oder Daten zu Bewegungszyklen, Betriebsdauer, Drehmomentkurve, Drehzahl, Strom, und/oder Vibrationen,
- technische Eigenschaften, technische Anforderungen und/oder technische Parameter wie Härtegrad eines Materials, insbesondere eines Metalls, Oberflächengüte, Eignung für Umgebungsbedingungen, Aufwand bezüglich einer Umgestaltung einer Topologie, eines neuen Bauteils (20) oder Werkzeugs (24), und/oder Typ einer Kommunikationstechnologie,

und/oder dass die Verfügbarkeitsspezifikation zumindest eine Information bezüglich eines Lagerbestands, einer Lieferzeit, und/oder Kosten von Ressourcen (20) umfasst.

**12.** Verfahren (100) nach einem der vorhergehenden Ansprüche,
**dadurch gekennzeichnet,**

**dass** die Komponenten (20) zumindest eine der folgenden Komponenten (20) umfassen:

- Verbindungsmodule, welche zur, insbesondere dezentralen, Verbindung von Geräten im Feld der industriellen Anlage (1) ausgeführt sind, um eine zentrale oder dezentrale Topologie der industriellen Anlage (1) zu ermöglichen und/oder Automatisierungsfunktionen in der industriellen Anlage bereitzustellen, vorzugsweise über ein Kommunikationssystem,
- Verbindungselemente, vorzugsweise in der Form von Kabeln, welche die Geräte mit den Verbindungsmodulen verbinden,

wobei die industrielle Anlage (1) gemäß einem Anlagentyp als eine elektrische und/oder pneumatische und/oder hydraulische und/oder fluidtechnische und/oder mechanische Anlage (1) ausgeführt ist, wobei vorzugsweise wenigstens ein Netzgerät zur Energieversorgung mit den Verbindungsmodulen elektrisch verbunden ist, wobei bevorzugt zumindest einige der Verbindungsmodule eine dezentrale Steuerung bereitstellen und/oder über ein Feldbussystem mit einer zentralen Steuerung verbunden sind, um zumindest eine Steuerungsprogrammierung für die Geräte auszuführen, wobei die wenigstens eine Umgestaltungsmaßnahme zumindest eine der folgenden umfassen kann:

- Eine Um- und insbesondere Neugestaltung der Steuerungsprogrammierung,
- Eine Um- und insbesondere Neugestaltung der Automatisierungsfunktionen,
- Eine Um- und insbesondere Neugestaltung der Topologie,
- Eine Um- und insbesondere Neugestaltung der Verbindungen,
- Einen Austausch zumindest eines der Geräte,
- Einen Austausch zumindest eines der Verbindungselemente,
- Eine Transformation des Anlagentyps,
- Eine Anpassung der Energieversorgung, vorzugsweise hinsichtlich einer Spannungshöhe und/oder Stromstärke,
- Eine Anpassung der Kommunikationstechnologie des Kommunikationssystems,
- Eine Änderung wenigstens eines Werkzeuges in einem Magazin,
- Eine Änderung wenigstens eines Verbrauchmaterials,
- Eine Änderung wenigstens eines Verschleißteils
- Eine Änderung von wenigstens einem Maschinenelement wie eines Lagers.

**13.** Verfahren (100) nach einem der vorhergehenden Ansprüche,
**dadurch gekennzeichnet,**
**dass** die wenigstens eine Umgestaltungsmaßnahme eine automatische Konfiguration einer ausgewählten Ressource (20) und insbesondere Bauteils (20) zur Integration in die und/oder zum Verwenden mit der industrielle(n) Anlage umfasst, vorzugsweise eine Konfiguration eines elektrischen und/oder mechanischen Werkzeuges (24), bevorzugt eines Bohrers und/oder Fräskopfes und/oder einer Lehre, insbesondere Kugellehre.

**14.** Computerprogramm (50), umfassend Befehle, die bei der Ausführung des Computerprogramms (50) durch wenigstens einen Computer (10) diesen veranlassen, das Verfahren (100) nach einem der vorhergehenden Ansprüche auszuführen.

**15.** Vorrichtung (10) zur Datenverarbeitung, die eingerichtet ist, das Verfahren (100) nach einem der Ansprüche 1 bis 13 auszuführen.

101

102

103

104

105

100

10

15

50

**Fig. 1**

**Fig. 2**

**OEE - Gesamtanlageneffektivität**

| Gesamtzeit (7 Tage x 24 h) | | | | |
|---|---|---|---|---|
| Planbelegungszeit | | | | Geplanter Stillstand |
| Fertigungszeit effektiv | | | Störungen; Rüstvorgänge | |
| Ist - Ausbringung | | Geschwindigkeit; Stillstand | | |
| 0 Fehler Ausbringung | Nacharbeit; Ausschuß | | | |
| 0 Fehler Ausbringung | Qualitätsverlust | Leistungsverlust | Zeitverlust | Geplanter Stillstand |

| OEE | = | Qualitätsfaktor | x | Leistungsfaktor | x | Nutzungsfaktor |
|---|---|---|---|---|---|---|

# Fig. 3

## EUROPÄISCHER RECHERCHENBERICHT

Nummer der Anmeldung

EP 24 19 1465

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2022/382248 A1 (MILLER SCOTT A [US] ET AL) 1. Dezember 2022 (2022-12-01) <br> * Zusammenfassung * <br> * Abbildungen 1,14,15 * <br> * Absatz [0044] - Absatz [0115] * <br> ----- | 1-15 | INV. <br> G05B19/418 <br> G06Q10/0631 <br><br> ADD. <br> G05B23/02 |
| X | SAMPATH R ET AL: "Control Reconfiguration of Discrete Event Systems With Dynamic Control Specifications", <br> IEEE TRANSACTIONS ON AUTOMATION SCIENCE AND ENGINEERING, IEEE SERVICE CENTER, NEW YORK, NY, US, <br> Bd. 5, Nr. 1, 1. Januar 2008 (2008-01-01), Seiten 84-100, XP011202444, <br> ISSN: 1545-5955 <br> * das ganze Dokument * <br> ----- | 1-15 | |
| X | US 2022/357723 A1 (LIU YUSHAN [DE] ET AL) 10. November 2022 (2022-11-10) <br> * Zusammenfassung * <br> * Absatz [0012] - Absatz [0025] * <br> ----- | 1-15 | |

**RECHERCHIERTE SACHGEBIETE (IPC)**

G05B
G06Q

Der vorliegende Recherchenbericht wurde für alle Patentansprüche erstellt

| Recherchenort | Abschlußdatum der Recherche | Prüfer |
|---|---|---|
| Den Haag | 14. Januar 2025 | Kielhöfer, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 1465

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2025

| Im Recherchenbericht angeführtes Patentdokument | Datum der Veröffentlichung | Mitglied(er) der Patentfamilie | Datum der Veröffentlichung |
|---|---|---|---|
| US 2022382248 A1 | 01-12-2022 | CN 114137910 A | 04-03-2022 |
| | | EP 3965034 A1 | 09-03-2022 |
| | | US 2022066415 A1 | 03-03-2022 |
| | | US 2022382248 A1 | 01-12-2022 |
| | | US 2023324880 A1 | 12-10-2023 |
| US 2022357723 A1 | 10-11-2022 | CN 115309944 A | 08-11-2022 |
| | | EP 4086825 A1 | 09-11-2022 |
| | | US 2022357723 A1 | 10-11-2022 |

Für nähere Einzelheiten zu diesem Anhang : siehe Amtsblatt des Europäischen Patentamts, Nr.12/82